(19) Europäisches Patentamt
European Patent Office
Office européen des brevets

(11) **EP 4 020 357 A1**

(12) **EUROPEAN PATENT APPLICATION**

(43) Date of publication:
**29.06.2022  Bulletin 2022/26**

(21) Application number: **21217589.7**

(22) Date of filing: **23.12.2021**

(51) International Patent Classification (IPC):
***G06Q 10/10*** *(2012.01)*

(52) Cooperative Patent Classification (CPC):
**G06Q 10/105**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **23.12.2020  US 202063130343 P**

(71) Applicant: **Indiggo Associates LLC**
**Bethesda, MD 20814 (US)**

(72) Inventors:
• **PERINCHERRY, Vijay**
  **Maryland, 20854 (US)**
• **GELBART, Janine**
  **Maryland, 20814 (US)**
• **INZELSTEIN, Marc**
  **Maryland, 20852 (US)**

(74) Representative: **Cooley (UK) LLP**
**22 Bishopsgate**
**London EC2N 4BQ (GB)**

(54)  **ADAPTIVE SYSTEMS, APPARATUS AND METHODS FOR ALIGNING ORGANIZATIONAL WORKFLOWS WITH ORGANIZATIONAL PURPOSE**

(57)    A processor-implemented method includes defining, via a processor, a user purpose profile for each user from a plurality of users within an organization having an organizational purpose. The method also includes tracking, automatically via the processor and for each user from the plurality of users, an alignment among: (1) a representation of at least one work-related parameter such as strategy, a goal, or a associated with that user of a computer network of the organization, (2) activity data associated with that user and occurring with the computer network of the organization, and (3) at least one of (i) a representation of the organizational purpose, or (ii) and the user purpose profile associated with that user, to produce tracked data. The method also includes identifying at least one recommended action based on the tracked data.

Schematic of the System to Integrate PURPOSE into Daily Workflow

**FIG. 1A**

FIG. 1B

## Description

### *Cross-Reference to Related Applications*

This application claims priority to, and the benefit of, U.S. Provisional Patent Application Number 63/130,343, filed December 23, 2020 and titled "Adaptive Systems, Apparatus and Methods for Aligning Organizational Workflows with Organizational Purpose," the entire contents of which are incorporated by reference herein. This application is also related to U.S. Patent Number 10,255,700, issued April 9, 2019 and titled "Apparatus and Methods for Generating Data Structures to Represent and Compress Data Profiles," the entire contents of which are hereby incorporated by reference.

### *Field of Disclosure*

One or more embodiments described herein relate generally to apparatuses and methods for the representation and adjustment of organizational purpose and alignment thereof based on multiplexed networked resources and interactive user input.

### *Background*

Individual and organizational purpose are concepts that have traditionally been described in qualitative terms, rather than in quantitative terms. Qualitative descriptions, however, cannot quantify the information upon which they are based, nor can they quantify the levels of uncertainty associated with such information.

### *Summary*

In some embodiments, a processor-implemented method includes defining, via a processor, a user purpose profile for each user from a plurality of users within an organization having an organizational purpose. The method also includes tracking, automatically via the processor and for each user from the plurality of users, an alignment among: (1) a representation of at least one work-related parameter such as strategy, a goal, or a associated with that user of a computer network of the organization, (2) activity data associated with that user and occurring with the computer network of the organization, and (3) at least one of (i) a representation of the organizational purpose, or (ii) and the user purpose profile associated with that user, to produce tracked data. The method also includes identifying at least one recommended action based on the tracked data.

In some embodiments, a method includes assessing, via a processor, a purpose connectivity for a user within an organization. The assessing includes sequentially displaying a set of prompts to the user, via a user interface, and based on an engagement schema. A second prompt and each subsequent prompt from the set of prompts being based on a response, from a set of responses, received in response to a preceding prompt from the set of prompts. The assessing also includes calculating the purpose connectivity based on the plurality of responses. In response to detecting that a value of the purpose connectivity is below a predefined threshold, a signal is sent to cause a remedial action.

In some embodiments, a method includes sending, from a processor and via a communications network, a signal to cause sequential display of a plurality of interactive prompts to a user. At least one signal representing a plurality of responses is received, at the processor, via the communications network, and in response to the user interacting with the plurality of interactive prompts. An adjusted weight is calculated, for a link between the at least one response from the plurality of responses and an associated interactive prompt from the plurality of interactive prompts. At least one dimension is identified based on the at least one response, and a classification for the at least one response is determined based on the at least one dimension. A multidimensional profile of the user is computed based on at least one of the adjusted weight, the at least one dimension, and the classification, and a representation of the multidimensional profile of the user is displayed via a user interface within the communications network. The multidimensional profile can represent a compressed plurality of data clusters generated by accessing multiple networked database systems.

In some embodiments, a processor-implemented method includes iteratively assessing, via a processor, a characterization parameter for a user within an organization. The iterative assessment includes causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts. The iterative assessment also includes calculating the characterization parameter based on the plurality of responses, and causing display of a representation of the characterization parameter via the user interface.

### *Brief Description of the Drawings*

FIG. 1A is a schematic of a system to integrate core purpose into a daily workflow of an organization, according to an embodiment.
FIG. 1B is a schematic of a system to measure core purpose, according to an embodiment.
FIG. 2 shows an engagement schema for soliciting core purpose, according to an embodiment.
FIG. 3 is a directional graph representation of relationships between prompts and responses, according to an embodiment.
FIG. 4 is a flow chart illustrating a method for dynamically adjusting the strength of links within a directional graph, according to an embodiment.

FIG. 5 illustrates a system block diagram of a compute device configured to perform data compression, according to an embodiment.

FIG. 6 is a flow diagram illustrating a method for data compression, according to an embodiment.

FIG. 7 is a flow diagram illustrating a method of inclination value range, or "mindset leaning" distribution, computation, according to an embodiment.

FIG. 8 is a flow chart illustrating a computer implemented method for soliciting user responses and computing a multidimensional profile of the user, according to an embodiment.

FIG. 9 is a flow chart illustrating a computer implemented method for soliciting user responses and calculating a characterization parameter, according to an embodiment.

FIG. 10 is a flow chart illustrating a computer implemented method for quantifying purpose connectivity and causing remedial actions to be performed, according to an embodiment.

FIG. 11 is a diagram of an example neural network, suitable for performing purpose calibrations of the present disclosure, according to an embodiment.

FIG. 12 is a flow diagram illustrating a method for identifying recommended actions based on tracked alignments, according to an embodiment.

FIG. 13 is a flow diagram illustrating a method for querying and displaying alignment data, according to an embodiment.

FIG. 14 is a flow diagram illustrating a method for tracking purpose-related metrics and for tracking relationships among one or more purpose profiles, goals, priorities and/or focus areas, according to an embodiment.

FIG. 15 is a flow diagram illustrating a method for monitoring workflow data and its alignment with core purpose(s), and for identifying a recommended behavior modification, according to an embodiment.

FIG. 16 is a flow diagram illustrating a method for monitoring workflow data and its alignment with core purpose(s), and for identifying a recommended strategy modification, according to an embodiment.

FIG. 17 is a flow diagram illustrating a method for monitoring workflow data and its alignment with core purpose(s), and for identifying a recommended calendar modification, according to an embodiment.

FIGS. 18-20 are screenshots showing a digital communication platform (Microsoft® Teams) and the integration therein of a system ("indi") of the present disclosure, according to an embodiment.

FIGS. 21-22 are example screenshots showing metrics, trends, strategic advice, and system-generated insights provided by the indi system to a user, and user-selectable prompts to update a time commitment to a predefined goal or objective, according to an embodiment.

FIG. 23 is an example screenshot showing the automatic assignment of activities and events to priorities/goals, according to an embodiment.

FIG. 24 is an example screenshot showing the automatic scheduling of activities by the indi system, as well as the recommendation of a scheduled activity by the indi system, according to an embodiment.

FIGS. 25A-25C show a table of example metrics that can be generated and tracked, in any combination thereof, according to an embodiment.

FIGS. 26-27 are example screenshots showing metrics, trends, strategic advice, and user-selectable recommendations generated and displayed by the indi system, according to an embodiment.

FIG. 28 is an example screenshot showing department-level metrics and a graphical representation of enterprise-level performance, according to an embodiment.

FIG. 29 is an example screenshot showing multiple sets of individual-level metrics, crew (i.e., a group of individuals) information, and a user-selectable object to create a new crew via the indi system and a graphical representation of enterprise-level performance, according to an embodiment.

FIG. 30 is an example screenshot showing a leaderboard with aggregate metrics for each of multiple users or individuals within an organization, along with detailed metric data displayed for a selected user or individual, according to an embodiment.

FIG. 31 is an example screenshot showing predefined organizational drivers, with associated numbers of contributing business units, total numbers of hours (e.g., labor hours) invested, and number of days since each organizational driver was initially defined (i.e., when that driver was "turned on"), according to an embodiment.

FIG. 32 is an example screenshot showing an "explorer" view, in which a new driver is being defined (in the dark box), and overviews of previously-defined drivers for multiple different business units are shown, according to an embodiment.

FIG. 33 is an example screenshot showing an example communication within the indi system, where a user is requesting feedback from a colleague regarding their list of drivers, according to an embodiment.

FIG. 34 is an example screenshot showing a graphical representation of indirect, moderate, and direct connection to purpose metrics calculated by the indi system, according to an embodiment.

FIG. 35 is an example screenshot showing a detailed view of the definition of a specific business unit-level driver, including a description, related/supported drivers, contributing leaders, according to an embodiment.

FIG. 36 is an example screenshot showing various business unit-level metrics, including capacity forecasts, drivers, amounts of time invested in drivers for a specific month, year-to-date, and lifetime, according to an embodiment.

FIG. 37 is an example screenshot showing a graphical depiction of collective return on leadership ("ROL") and fundamental metrics including strategic clarity and leadership alignment, according to an embodiment.

FIG. 38 is an example screenshot showing an interactive bar graph representation of total time investment, contributing leaders, and average investment per leader, for a variety of predefined drivers, according to an embodiment.

*Detailed Description*

Establishing a strong organizational culture and a shared core organizational purpose ("core purpose") among members of the organization have been shown to contribute to increased engagement, motivation, productivity, efficiency, effectiveness, drive and performance, and better outcomes. Meaningful progress is often driven by purposeful organized efforts of individuals working intentionally toward achieving common objectives. The effectiveness of any individual or collective effort can be significantly influenced by the underlying reasons for (i.e., the core purpose of) the effort, and by the degree to which each individual person or team member understands and observes the connection between their actions and those underlying reasons. Organizational leaders have frequently sought ways of integrating core purpose into their organizational operations, and to ensure and enhance an awareness of, and connection to, purpose across the organization.

Nevertheless, core purpose has remained difficult to measure or quantify within a framework that can be leveraged. Known approaches to assessing core purpose or alignment between personal action and collective action have generally relied on interpersonal communications and/or survey instruments . Survey instruments are often unreliable due to several factors including:

- Preconceived notions about potential misuse of the responses;
- Subjective interpretations of survey questions by the respondents;
- The presence of extraneous factors that impact the respondent's state of mind while responding to the survey;
- The fact that assessments taken at a fixed point in time may be distorted;
- A lack of connection to the greater business context;
- Artificial separation between core purpose and the actual work being done; and
- Lack of insight into individual purpose as it relates to organizational purpose.

Without a reliable, objective assessment of core purpose, it can be difficult for an organization to:

1. Study the effectiveness of investments in initiatives aimed at improving core purpose among team members;

2. Obtain an accurate reading of the status of core purpose within the organization; and/or

3. Improve the status of core purpose within the organization.

As business leadership paradigms continue to shift from shareholder capitalism to stakeholder capitalism, core purpose is expected to play an increasingly large role, and techniques to quantify core purpose are increasingly desirable.

Progress of an organization is driven by how its daily operations and workflow align with its core PURPOSE. This operational alignment can be achieved if and only if a critical mass of the team members that constitute the organization conduct their daily tasks in ways that are aligned to the core collective PURPOSE in an effective manner. A critical factor that influences effectiveness in individual daily tasks is the level of alignment that an individual team member experiences between actions that constitute the daily flow of work and their individual PURPOSE.

An organization can benefit if it successfully instills alignment between individual daily tasks and individual PURPOSE to the extent individual PURPOSE is aligned with the collective organizational PURPOSE. Today, however, there are no available methods or frameworks that enable organizations to improve this overall operational alignment described above.

Embodiments of the present disclosure feature a system and underlying methods to help organizations to achieve their core PURPOSE by aligning the daily workflow to it. The system can empower teams to ensure that the tasks and actions that constitute daily workflow are assigned to the right team members. The overall effect is not only limited to achievement of organizational success, but also to higher levels of fulfillment to the team members leading overall increase in retention and success. Some systems of the present disclosure are referred to herein as "indi," and the software implemented in some systems of the present disclosure is referred to as Return on Leadership ("ROL").

PURPOSE has traditionally been an abstract concept with no concrete methodologies or standard approaches to integrate, quantify or analyze this. Traditionally organizations have relied on unreliable survey instruments to extract a subjective sense of PURPOSE of individuals.

Today organization lack any structured approach to facilitate improvement in their ability to achieve their core PURPOSE outside of general training programs that rely on individuals choosing to take on appropriate responsibilities, and plan and execute them. There are no devices to provide systematic support for the team members.

Embodiments of the present disclosure can include a computer system and an underlying methodology to help individual team members of an organization plan and execute their daily tasks in a manner that is maximally aligned to collective organizational PURPOSE. This is achieved by enabling connections between individual PURPOSE and collective PURPOSE, as well as linking team members' daily tasks and actions to their individual PURPOSE.

The system consists of the following components:

- Module to gather information on individuals' assessment of their daily tasks
- Module to automatically identify the types of tasks that are aligned to individual purposes
- Module to automatically connect tasks and individuals to maximize the overall connection to individual purpose
- Module to nudge individuals toward performing tasks that are most aligned with their individual purpose
- Module to measure impacts of specific nudges on individual execution of daily tasks

Embodiments of the present disclosure can include a system that allows individual team members to:

- Weave core purpose into the flow of daily work/intentionally connect the work being done to individual and organizational purpose
- Weave core purpose into daily operations and explicitly connect daily tasks and actions to individual and organizational purpose
- Have ongoing awareness of degree of alignment of individual purpose and organizational purpose in work being done
- Connect individual Purposes to team's Purpose, goals, objectives, strategies and priorities
- Efficiently allocate individual investments of resources (including but not limited to time, money, materials, and attention) to individual Purpose
- Efficiently allocate individual investments of resources (including but not limited to time, money, materials, and attention) to team/group or organization core purpose

Embodiments of the present disclosure can include a system that allows organizations to:

- Use a concrete methodology to integrate core purpose into the flow of work
- Create an environment that integrates core purpose into the fabric of the organization
- Integrate core purpose into the execution of short-term and long-term strategies

- Integrate purpose into events, interactions and meetings involving the team members
- Integrate purpose into meeting agendas, outcomes, decisions and next steps

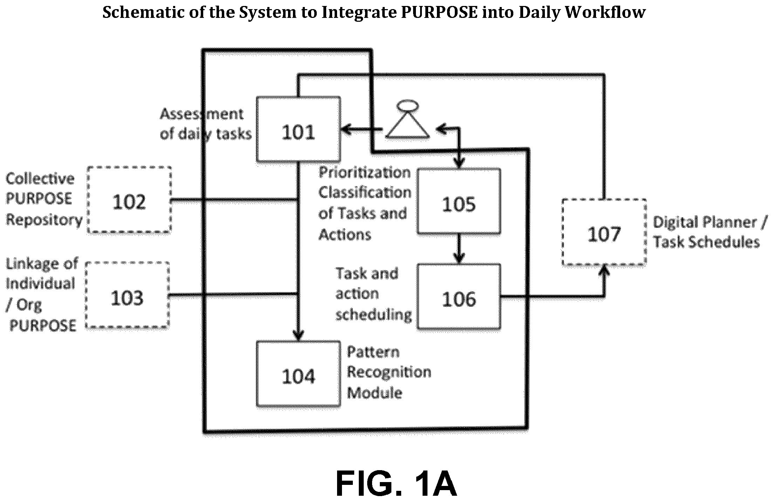

The structural design of the constituent modules of the present disclosure, in accordance with some embodiments, is set forth below, with reference to FIG. 1A.

System and Method

Configuration of the constituent modules of the system is presented in FIG. 1A, each module of which is described below.

Module 101 represents an interface for individuals to indicate assessments of their daily tasks

Module 102 represents the data repository that contains information about organizational purpose, all individual purposes, and links between organizational purpose and individual purpose (subject of measurement patent)

Module 103 is a system that determines the level of connection to purpose at individual and collective level (subject of measurement patent)

Module 104 is a system that automatically analyzes and extracts patterns of daily task attributes to create individualized task profiles that are best aligned to individual purpose

Module 105 is a system that prioritizes and classifies tasks on the basis of the level of connection to individual purpose. The tasks are classified into do, ignore, or delegate categories

Module 106 is an interface that offers guidance to individuals to prioritize and schedule their tasks based on the do/ignore/delegate classification

Module 107 represents a digital planner or scheduler that maintains the collection of daily tasks and actions

In some embodiments, a system enables individuals to represent connections between their individual PURPOSE and organizational PURPOSE. The system provides a way for individuals to assess the use of their resources (time, money and resources) in terms of alignment to individual and organizational PURPOSE

The system can prioritize and classify daily activities and tasks that individual team members in an organization should do, ignore or delegate so as to maximize connection to their individual PURPOSE

The system can propose plans and schedules for individuals to achieve the highest level of connection to individual PURPOSE

The system can maximize the likelihood of effective achievement of collective PURPOSE through effective achievement of connected individual PURPOSE

In some embodiments, a system and method are presented to enable individuals to articulate their individual PURPOSE

In some embodiments, a system and method are presented to enable individuals to articulate their collective/shared PURPOSE

In some embodiments, a system and method are presented to enable individuals to connect their individual PURPOSE to the shared group and/or organizational purpose

In some embodiments, a system and method are presented to enable individuals or groups to align actions, meetings, resources with individual PURPOSE

In some embodiments, a system and method are presented to extract patterns to identify task profiles that align to PURPOSE based on individual assessments

In some embodiments, a system and method are presented to classify actions, meetings and resources from the viewpoint of achieving connection to individual PURPOSE

In some embodiments, a system and method are presented to enable individuals to prioritize and execute taks and actions that reflect individual PURPOSE

In some embodiments, a system and method are presented to allow organizations to help individuals and groups to integrate core purpose into the flow of daily work

In some embodiments, a system and method are presented to allow organizations to help individuals and groups to integrate core purpose into the execution framework of their organization

In some embodiments, a system and method are presented to allow organizations to help individuals and groups to integrate core purpose into their use of calendar and their investment of time

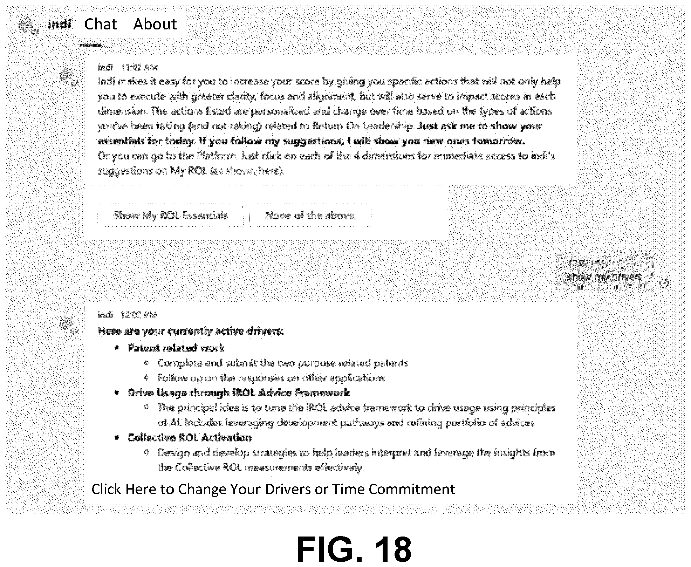

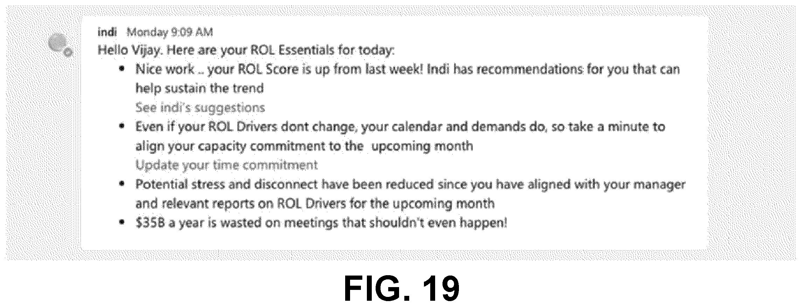

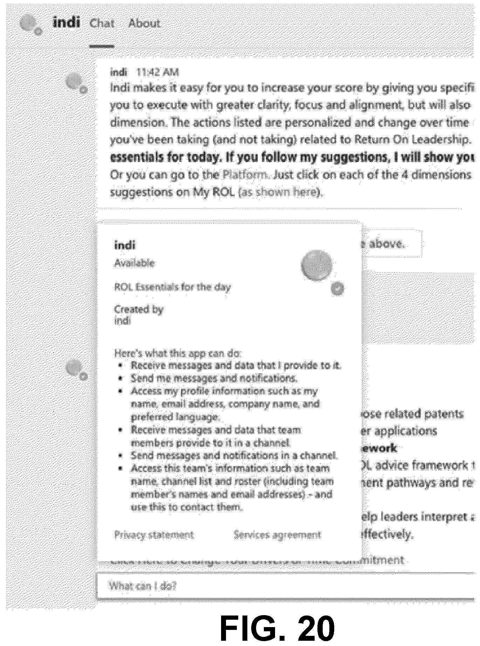

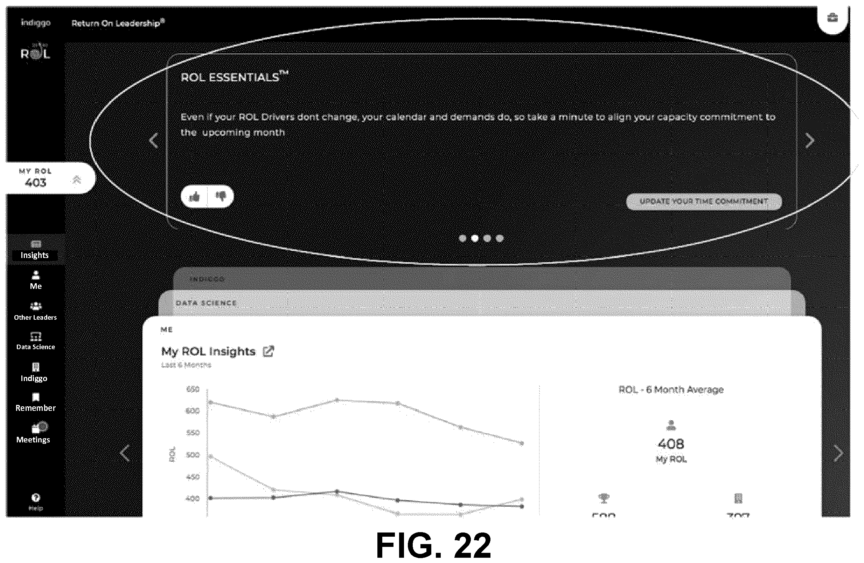

Additional details pertaining to the systems and methods set forth herein, according to some embodiments, including screenshots of a user interface / GUI, are provided in FIGS. 18-24, discussed below.

According to one or more embodiments of the present disclosure, a system and method are presented for measuring and tracking one or more characterization parameters associated with an organization, and for ensuring that one or more tasks being performed within a networked computer system of the organization are compliant with, or sufficiently aligned with, the one or more characterization parameters. More specifically, in some embodiments, a system and method are presented for measuring core purpose and/or for calibrating the level of connection that individuals and collections of individuals within an organization have to the core purpose. As used herein, a characterization parameter can refer to an organization's core purpose (e.g., a purpose or mission associated with an organization, such as a goal, objective, or desired outcome associated with the individuals of the organization, collectively), an individual user's core purpose (e.g., a purpose or mission associated with an individual person, who may be a member of an organization, such as a goal, objective, or desired outcome associated with that one individual), a connectivity (or quantified connection strength) between individual core purpose(s) and discrete tasks, a connectivity between core purpose(s) of the organization and discrete tasks, a connectivity between individual core purpose(s) and one or more strategies, connectivity between core purpose(s) of the organization and one or more strategies, an organizational goal or benchmark (i.e., a goal or benchmark associated with an organization), or an individual goal or benchmark (i.e., a goal or benchmark associated with an individual person, who may be a member of an organization). The organization's core purpose(s), individual user's core purpose(s), connectivities, and goals or benchmarks discussed above can, individually or collectively, refer to an "organizational sentiment" or "organizational purpose" in that they quantify perceptions of organizational purpose and its implementation. Systems and methods set forth herein facilitate the measurement, integration, and articulation of one or more characterization parameters (such as core purpose) via a networked computer system of an organization, for example using an adaptive spanning tree algorithm.

In some embodiments, a system and a method are provided for reliably and objectively measuring individual and collective core purpose, and for activating the individual and collective awareness of and alignment with core purpose. The objective measurements can be based, for example, on real-time actions, behaviors, and/or choices of individuals (e.g., team members), and can be stored and presented (e.g., via a graphical user interface (GUI)) as a single dimensional measurement or a multi-dimensional measurement.

The measurement of an individual's core purpose can be based on representations (e.g., linguistic, numeric, and/or algorithmic representations) of one or more of:

- A degree of connection between the organization's core purpose and the organization's strategy;
- A degree of clarity of the individual's own purpose in his/her job;
- A degree of connection between the individual's personal core purpose and the core purpose of the organization;
- A degree of connection between an individual's "drivers" (e.g., personal goals, objectives, priorities, and/or aspirations) and the individual's personal core purpose;
- A degree of connection between the individual's personal core purpose (i.e., the reasons underlying the individual's personal goals, objectives, priorities and aspirations) and the organization's drivers (e.g., strategy goals, objectives, priorities, objectives etc.);
- A degree of connection between the individual's drivers (e.g., personal goals, objectives, priorities and aspirations) and the organization's core purpose;
- A degree of connection between the individual's day-to-day interactions (e.g., events, meetings, etc.) and the individual's core purpose;
- A degree of connection between the individual's day-to-day interactions (e.g., events, meetings, etc.) and the organization's core purpose;

- Alignment among team members (e.g., supervisors and/or employees) between a core purpose of the team and the core purpose of the organization;
- A degree of connection between one or more meeting agendas and the individual's core purpose;
- A degree of connection between one or more meeting agendas and the core purpose of the organization; and
- A degree of connection between an overall use of time of the individual or of the organization, and the core purpose of the individual or of the organization.

In some embodiments, a system includes an interactive platform, hosted on a networked computer system of an organization, and via which each individual team member can:

- Learn about the core purpose of the organization;
- Identify and articulate / describe their individual core purpose;
- Identify and articulate / describe the organization's core purpose;
- Articulate / describe the perceived connection between the individual's core purpose and the organization's core purpose;
- Connect their individual work with their individual purpose (e.g., by modifying one or more tasks);
- Connect their individual work with the organization's core purpose (e.g., by modifying one or more tasks);
- Maintain an ongoing awareness, over time, of a degree of alignment between the individual's core purpose and the organization's core purpose;
- Maintain an ongoing awareness, over time, of a degree of alignment between the work being done by the individual and the individual's core purpose and/or the organization's core purpose;
- Connect their individual core purpose to the core purpose, goals, objectives, strategies and priorities of the team;
- Allocate investments of resources (including, but not limited to: time, money, materials, and attention) to the individual's core purpose;
- Allocate investments of resources (including, but not limited to: time, money, materials, and attention) to the team's core purpose; and/or
- Allocate investments of resources (including. but not limited to: time, money, materials, and attention) to the organization's core purpose.

In some embodiments, a system includes an interactive platform, hosted on a networked computer system of an organization, and via which organizational leaders can:

- Implement a methodology for integrating the organization's core purpose into one or more workflows;

- Communicate the organization's core purpose to the individual members of the organization;
- Provide reminders to the individual members of the organization about the organization's core purpose;
- Increase the prominence and incidence of representations of the organization's core purpose within the organization's systems;
- Integrate the organization's core purpose into strategy formulation and/or strategy execution;
- Integrate the organization's core purpose into events, interactions, meetings, meeting agendas, outcomes, decisions and plans; and
- Facilitate the individual tasks enumerated above.

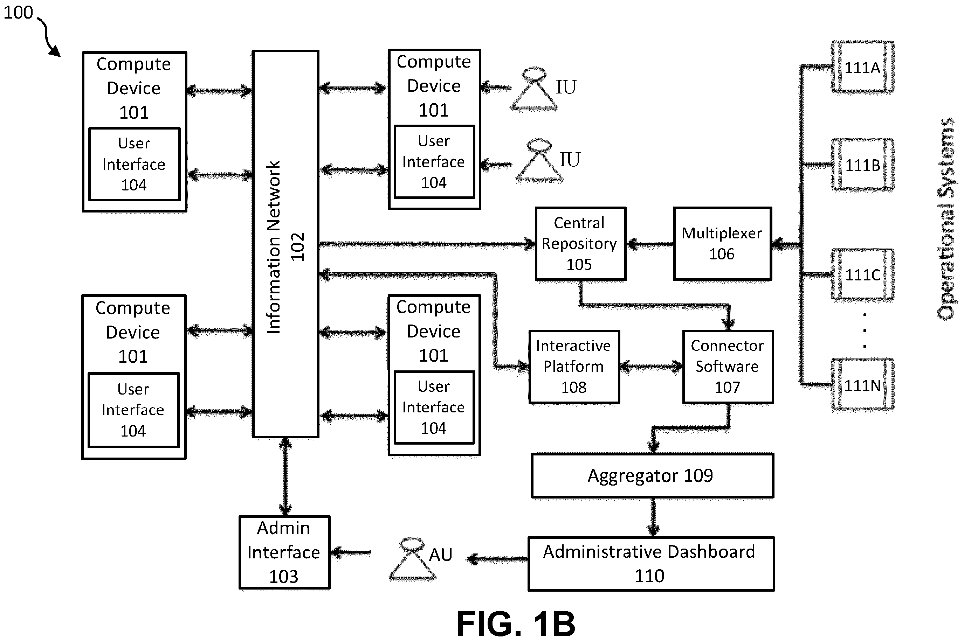

FIG. 1B is a schematic of a computer-implemented system 100 for measuring core purpose, according to an embodiment. The computer-implemented system 100 includes a plurality of compute devices 101, each of which can include a processor (not shown) and a memory (not shown) that stores processor-executable instructions. Each compute device 101 from the plurality of compute devices includes a user interface 104 (e.g., a GUI) with which a user from a plurality of users (e.g., a team member from a plurality of team members within an organization) can interact, during operation. In some implementations, each compute device 101 is associated with a particular individual user "IU." Each user can interact with the user interfaces 104 of the compute devices 101 to provide input data that includes, but is not limited to, one or more of the following: the user's individual core purpose; the user's individual drivers, goals, objectives, priorities and/or strategies; a perceived connection between the user's individual drivers, goals, objectives, priorities and/or strategies and the user's individual core purpose; a perceived connection between the user's individual core purpose and the organization's core purpose; and a perceived connection between the user's individual drivers, goals, objectives, priorities and/or strategies, and an organizational strategy. Any of the foregoing input data (e.g., the user's individual core purpose) may be stored in a memory (not shown) of the system 100 and designated as "private" (such that other users cannot access it) until the user modifies a permissions setting for that input data.

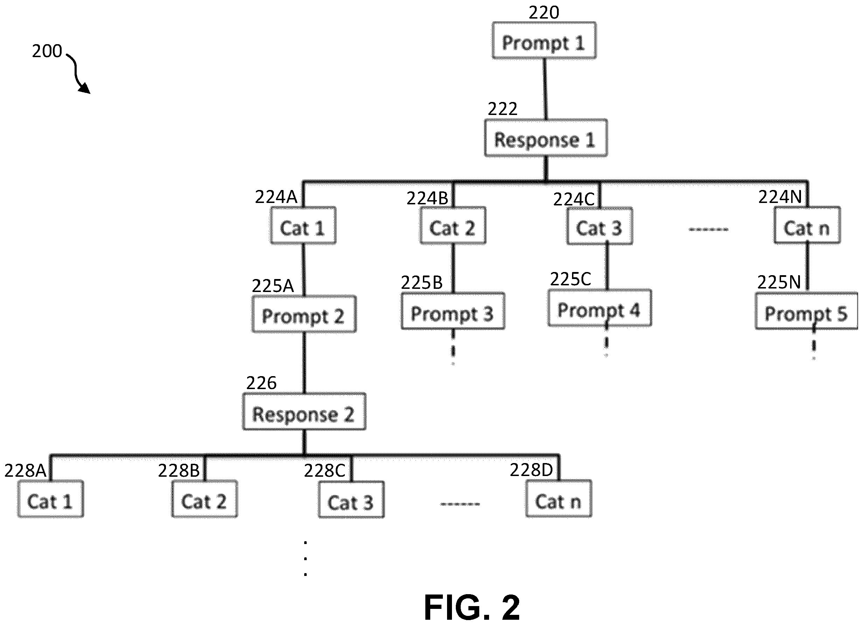

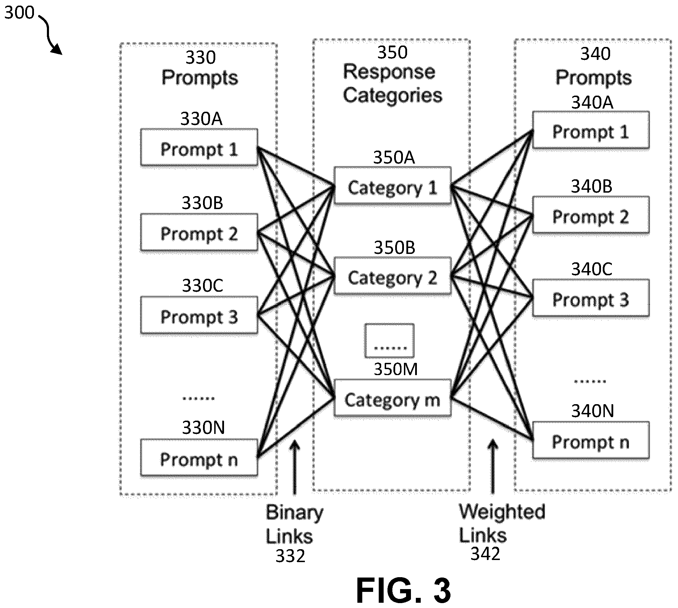

The input data can be compiled using a dynamic engagement schema (also referred to herein as a "conversational schema"). The dynamic engagement schema can be structured, for example, as an adaptive spanning tree that includes prompts and responses, as shown and discussed below with reference to FIG. 2. The prompts and responses can be represented, for example, as a directional graph, and example of which is shown in FIG. 3. Prompts can be linked to specific responses and/or response categories through binary links. A finite (e.g., predefined) number of response categories may be linked to each response. Each prompt can be presented to one or more of the individual users IU, to elicit responses from the individual users IU, and those responses can be classified into one or more response categories from a finite (e.g., predefined) set of response categories (as also shown in FIG. 3). Each response category can also be linked to, or associated with, the set of prompts based on a strength of connectivity, which may be dynamically adjusted. The response category classification(s) can then be used to identify a next prompt or a next set of next prompts for presentation to the one or more of the individual users IU. In other embodiments, a classification step is not performed, and rather a received response is mapped directly to a predefined next prompt or set of prompts.

Prompts can be selected according to an algorithm, an example of which is as follows: If, at a first step "T," the response category was "I," then a prompt at step T+1 ("prompt[T+1]") is identified as: prompt[T+1] = prompt(J) such that an associated strength of connectivity "strength(I,J)" is maximized over all J. The strength(I,J) can be dynamically adjusted according to the following formulation: $strength(I,J) = strength(I,J) + (1-strength(I,J)) \times a/N$, where N represents a total number of users that engage with the conversational schema, and a value "a" represents whether the user responded to the prompt at all (*a* = +1 if the user responded, and *a* = -1 if the user did not respond)

Returning to FIG. 1B, an information network 102 facilitates communication among the individual users IU, and the sharing of individual core purposes of the users and the organization's core purpose. The computer-implemented system 100 also includes an administrative interface 103 through which one or more administrative users "AU" (e.g., the organization's leaders) can specify, input, and/or transmit a variety of data, such as, for example:

- The organization's core purpose;
- The organization's strategy, goals, objectives and/or priorities; and
- Connections between the organization's core purpose and its strategy, goals, objectives and priorities.

Although shown and described as distinct components in FIG. 1B, in other embodiments, one or more of the connector software, the central repository 105, the aggregator 109, the administrative dashboard 110, and the administrative interface 103 can be co-located within a common compute device, for example as part of the interactive platform 108. Alternatively or in addition, the administrative interface 103 can transmit data for dissemination to any component of FIG. 1B via the information network 102 and/or via direct communication with one or more such components (e.g., the interactive platform 108, the connector software 107, etc.).

The computer-implemented system 100 also includes interfaces 104 (each of which, in some implementations, may be combined with or part of a compute device 101) through which each individual users IU can view and specify a level of connection between their individual core purposes and the organization's purpose, goals, objectives, outcomes and priorities. The computer-implemented system 100 also includes a central repository 105 (e.g., a processor-readable memory) that stores information supplied (i.e., input within the system 100) by users and administrative users on goals, objectives, outcomes, priorities and core purposes.

The computer-implemented system 100 also includes a multiplexer 106 that is communicably linked to multiple operational systems 111A through 111N (also referred to herein as "discrete network resources") including, but not limited to: electronic calendars, correspondence systems (e.g., email servers, messaging software, etc.), project management systems, and human resources systems. Alternatively or in addition, one or more of the compute devices 101 can include any or all of the discrete network resources. The multiplexer 106 is configured to extract information (e.g., asynchronously) from the discrete network resources and, optionally, to cause storage of the extracted information (e.g., in the central repository 105) and/or transmission of a signal representing the extracted information to cause display of the extracted information via one or more of the interfaces 104.

The computer-implemented system 100 also includes connector software 107 stored in a memory (not shown) and/or executed on a processor (not shown). The connector software 107 includes instructions to perform assessments of connections between individual resource units (e.g., investments of resources such as time, money, computing resources, etc.), and associated individual core purposes and/or the organization's core purpose(s). Individual users UI can interact with the assessments performed by connector software 107 via an interactive platform 108 (implemented in software and/or hardware of a compute device of the system 100 and configured to access the discrete network resources, data associated with the individual users UI, etc.), and can provide feedback via the interactive platform 108 to the connector software 107 for continual enhancement of the assessment process.

The computer-implemented system 100 also includes an aggregator 109 (implemented in software and/or hardware) that aggregates assessments of links between individual resources, individual core purposes, the organization's core purpose(s), and collective goals, objectives, outcomes and priorities to generate measurements, such as the following measurements, for each individual user IU:

**A(IU)** = Number of the individual's resource units that are linked to the individual's core purpose(s) divided by the individual's overall / total number of invested resource units; and

**B(IU)** = Number of the individual's resource units that are linked to the organization's goals divided by the individual's overall / total number of invested resource units, where the individual's aggregated purpose is generated as a vectors **{A(IU),B(IU)}**. Aggregator 109 also aggregates the measurements across all individual users I to generate a vector **C** that represents {**D,E,P**}, where:

**D** represents a mean value of **A(IU)** over all individual users **IU**,
**E** represents a variance of **B(IU)** over all individual users **IU**, and
**P** represents the individual users **IU** as a percentage of available participants (=100 * individual users **IU**/ Total number of available participants).

The foregoing metrics measure (or quantify) an overall level of purpose experienced by the users IU both individually and collectively within the organization. More specifically:

- **A(IU)** measures an alignment between the individuals' resources and the individuals' core purpose(s);
- **B(IU)** measures an alignment between the individuals' resources and the core purpose(s) of the organization;
- **D/P** represents a degree to which overall connections to core purpose(s) are experienced within the organization;
- **E/P** represents a degree to which core purpose(s) are integrated into the strategy and execution of the organization; and
- **P** represents the proportion of available participants within the organization that interact with the system 100.

The computer-implemented system 100 also includes an administrative dashboard 110 via which administrative users AU can review the aggregated assessments generated by the aggregator 109.

In some embodiments, the computer-implemented system 100 (e.g., via one or more of the compute devices 101, the interactive platform 108, the connector software 107 and/or the aggregator 109) is configured to perform calibration of the measures of alignment to purpose (e.g., A(IU) and/or B(IU)) generated by the aggregator 109, based on time series data gathered by the system 100. The time series data can be gathered, for example, using anonymous point-in-time survey instruments (e.g., interactive surveys presented to the individual users IU (e.g., via their associated interfaces 104)), which are dynamic in that at least some subsequent prompts presented as part of the survey instrument are selected based on preceding responses (the responses including, for example, estimates). Multiple anonymous estimates spanning a period of time can be analyzed to improve the reliability of the assessments generated by the system 100. -The calibration of the system 100 and the measures generated by the system can provide benchmarks of individual and collective purpose measurements that can be used by an organization's leaders to quantitatively gauge / assess:

- Collective connection to, integration of, and operationalization of individual core purpose(s) and/or the organization's core purpose(s);
- Individual connection to, integration of and operationalization of individual core purpose(s) and/or the organization's core purpose(s);
- Changes in connection to, integration of and operationalization of individual core purpose(s) and/or the organization's core purpose(s);
- The desirability of intervention related to individual core purpose(s) and/or the organization's core purpose(s); and/or
- Impacts of initiatives on individual core purpose(s) and/or the organization's core purpose(s).

The system 100 can be used to measure the levels of individual core purpose(s) and/or connection to the organization's core purpose(s) for any individual user IU, group of individual users (e.g., grouped by department, region, functional role, etc.), or sub-group of individual users having a common purpose and set of goals, objectives and priorities..

FIG. 2 shows an engagement schema 200 for soliciting purpose, according to an embodiment. The engagement schema 200 can be implemented, for example, using the computer-implemented system 100 of FIG. 1B (e.g., via one or more of the compute devices 101, the interactive platform 108, the connector software 107 and/or the aggregator 109). As shown in FIG. 2, the engagement schema 200 has an adaptive spanning tree structure and includes a plurality of prompts (Prompt 1 (220) and Prompts 2 through "n" ((225A) through (225N))), where "n" is a predefined upper limit, and a plurality of responses (Response 1 (222) and Response 2 (226)). Each of the responses 222, 226 is associated with a prompt from the plurality of prompts (prompts 220 and 225A, respectively). The engagement schema 200 can be presented to each individual user IU from a plurality of individual users, for example via an interface (such as interface 104 of FIG. 1B, e.g., a GUI) associated with that individual user IU, during an engagement session. The engagement schema 200 is "dynamic" in the sense that a path or trajectory followed through the spanning tree can depend on the sequential responses received from the individual user IU in response to the prompts as they are presented. For example, an individual user IU may be presented with a first prompt 220 at a first time, and can input (e.g., via their interface) a first response 222 in response to the first prompt 220. Based on, and in response to, the first response 222, the engagement schema 200 selects a first response category from a plurality of response categories 1 through "n" (categories 224A through 224N, respectively), where "n" is a predefined upper limit. The selection of the first response category is based on the first response 222, and can be considered a categorization or classification of the first response 222. In response to selecting the response category, and based on the selected response category 224A through 224N, the engagement schema 200 selects a next (second) prompt from the prompts 225A through 225N for presentation to the individual user IU at a second time after the first time. Following the example of FIG. 2, prompt 2 (225A) is presented to the individual user IU at the second time, and in response, the individual user IU inputs Response 2 (226). The engagement schema 200 then selects a second response category from a plurality of categories 1 through "n" (categories 228A through 228N, respectively), and the process proceeds within additional subsequent selections of prompts, presentation of prompts, receiving of individual user inputs, etc., for example until a predefined number of iterations have been performed, or until a desired confidence level has been reached (e.g., as calculated based on the responses received from the individual user within a given engagement session), or until the individual user ceases to interact with the engagement schema 200. Engagement sessions can be presented to individual users upon request by the individual user, upon request by an administrative user, and/or according to a predefined schedule. The dynamic nature of the engagement schema can result in the quantification of individual core purpose(s) and/or connection to the organization's core purpose(s) for individual users.

FIG. 3 is a graphical representation of relationships between prompts and responses, according to an embodiment. The graph 300 of FIG. 3 can represent, for example, the response category and prompt selection processes employed in the engagement schema 200 of FIG. 2. As shown in FIG. 3, two sets of prompts, 330 and 340 (including prompts 1 through "n" (330A-330N) and prompts 1 through "n" (340A-340N), respectively, "n" referring to a predefined upper limit) are associated with or linked to a set of response categories 350. The response categories 350 include categories 1 through "m" (250A through 350M, respectively), where "m" is a predefined upper limit that may the same as, of different from, the predefined upper limit "n." The associations (or relationships) between the prompts 330 and the response categories 350 are binary links 332, and the associations (or relationships) between the prompts 340 and the response categories 350 are weighted links 342.

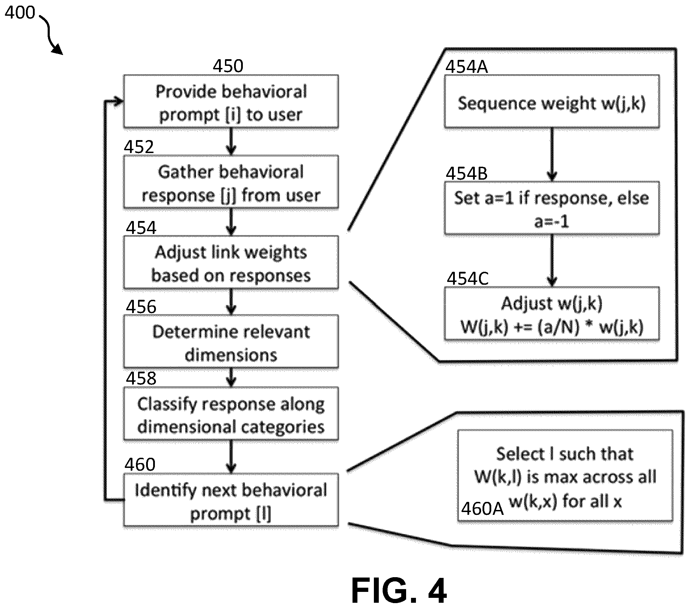

FIG. 4 is a flow chart illustrating a method 400 for dynamically adjusting the strength of links within a directional graph (e.g., for dynamically adjusting the weights of weighted links, such as the weighted links 342 in FIG. 3), according to an embodiment. The method 400 can be implemented, for example, using the computer-implemented system 100 of FIG. 1B (e.g., via one or more of the compute devices 101, the interactive platform 108, the connector software 107 and/or the aggregator 109). As shown in FIG. 4, the method 400 includes providing a behavioral prompt [i] (also referred to herein as a "prompt") to a user, at 450, and gathering (e.g., receiving or retrieving) a behavioral response [j] (also referred to herein as a "response") from the user at 452 in response to the behavioral prompt [i]. At 454, one or more link weights (e.g., for links between prompts and response categories, such as the weighted links 342 in FIG. 3) are adjusted based on the responses [j]. The adjustment at 454 can be implemented, for example as shown at 454A through 454C: at 454A, link weights "w(j,k)" for each link from a plurality of links are sequenced; at 454B, and for each link from the plurality of links, a value "a" is set to a value of 1 if the response is related to or associated with that link, otherwise "a" is set to a value of -1; and at 454C, the link weights w(j,k) are adjusted as follows (wherein "+=" is an addition assignment operator):

$$W(j,k) \mathrel{+}= (a/N) * w(j,k)$$

Relevant dimensions are determined at 456, based on the adjusted link weights and/or based on the behavioral response [j], and a next behavioral prompt [1] is identified at 460. The identification of the next behavioral prompt [1] can be implemented, for example, as shown at 460A: Select 1 such that W(k,1) is maximized across all w(k,x) for all x. The method 400 then loops back to step 450, when the behavioral prompt [1] identified at 460 is provided as behavioral prompt [i] to the user. The method 400 can iterate as shown in FIG. 4, for example, until a predefined total number of behavioral prompts have been provided to the user, until a predefined total number of behavioral responses [j] have been collected, etc.

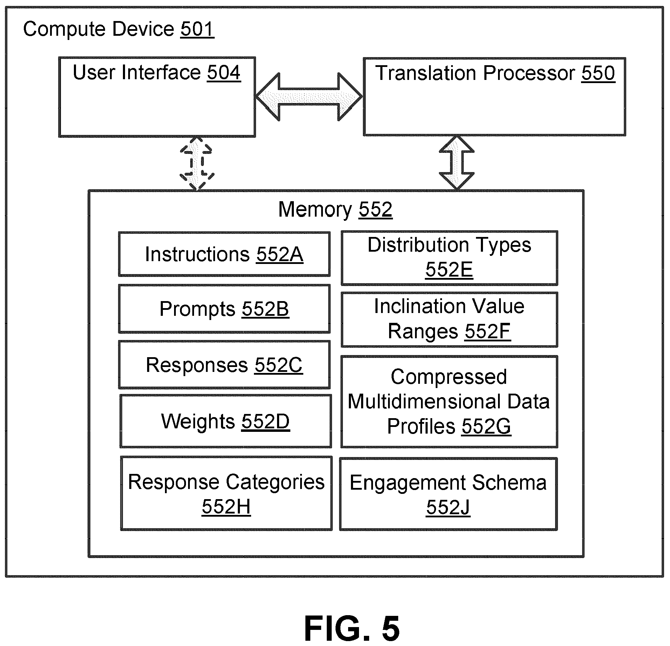

FIG. 5 illustrates a system block diagram of a compute device 501 (e.g., compute device 101 of FIG. 1B), configured to perform data compression, according to an embodiment. As shown in FIG. 5, the compute device 501 includes a user interface 504 (e.g., user interface 104 of FIG. 1B) that is operably coupled to a translation processor 550. The user interface 504 is configured to display a set of prompts 552B (also referred to as "stimuli"), such as prompts 225A-225N of FIG. 2 or prompts 330, 340 of FIG. 3, to an individual user and to receive from the user a set of responses 552C (such as responses 222, 226 of FIG. 2 or responses associated with the response categories 350 of FIG. 3) associated with the set of prompts 552B. The user interface 504 can be implemented as or can include one or more of a software application ("app"), a graphical user interface (GUI), and an input device such as a touchscreen, keyboard, mouse, keypad, etc. The user interface 504 can run on and/or be accessible via a user device (not shown) such as a desktop or laptop computer, or a mobile device such as a Blackberry or an iPhone. The translation processor 550 can be implemented using a microprocessor, an application-specific integrated circuit (ASIC), a central processing unit (CPU), a general purpose processor, etc. The translation processor 550 can be configured to perform operations on data received from an individual user via the user interface 504. The translation processor 550 can also be configured to collect data from the user device, for example by communicating with one or more software applications running on the user device (e.g., an email/calendar software such as Microsoft Outlook®, web conferencing software such as Cisco WebEx®, etc.). The translation processor 550 and, optionally, the user interface 504, are operably coupled to a memory 552, which may include a random access memory (RAM), a read only memory (ROM) device, a magnetic and/or optical recording medium and its corresponding drive, and/or another type of static and/or dynamic storage device that may store information and instructions for execution by the translation processor 550. Memory 552 can store processor-issuable instructions 552A as well as data including prompts 552B, responses 552C, weights 552D, distribution types 552E, inclination value ranges 552F, compressed multidimensional data profiles 552G, response categories 552H, and, optionally, one or more engagement schema (e.g., dynamic spanning tree(s)) 552J, for example in one or more databases. The processor-issuable instructions (or processor-readable instructions) can be stored in memory 552 and can cause the translation processor 550 to perform processes described herein.

Prompts 552B can include data that can be presented or displayed to an individual user via the user interface 504 to generate or trigger an action or response from the individual user, for example, a survey-type question, interactive form or graphic, prompt, pop-up window, calendar reminder, email, meeting request, hyperlink, news article, and/or the like. Responses 552C can include data that is received via the interface 504 in response to one or more of the prompts 552B, for example within a predetermined time period after the one or more prompts 552B are presented/displayed via the user interface 504. Response data 552C can include data input by an individual user action via the user interface 504 (e.g., typed text, voice-communicated text, touchscreen input data such as swipes, mouse clicks, etc.), for example where such individual user actions include answers to questions, minimizing or closing a pop-up window, accepting or declining a meeting request, etc. In other words, the response data 552C can be any type of response by the individual user via the user interface 504 in response to prompts 552B. Response data 552C can also include an indication of the time elapsed between the associated prompt 552B and the response 552C, and/or a manner of input of the response 105C (typed text, voice-communicated text, touchscreen input data such as swipes, mouse clicks, etc.). Each of the responses 552C can be paired with (or linked or associated with) an associated prompt 552B and, optionally, stored in the memory 552 as a prompt-response pair. Translation processor 550 can calculate (or determine) a weight 552D having a value (e.g., a value between 0 and 1) for each prompt-response pair, assign that weight to a prompt-response pair, and used that weight in the computation of one or more of the compressed multidimensional data profiles 552G. Weights 552D can be stored within stored memory 552.

As used herein, a compressed multidimensional data profile 552G is a vector representation of an individual user's preferences or "leanings" (or behavioral leanings) (also referred to herein as inclination value ranges 552F) associated with each of a set of attitudinal factors or "mindset dimensions" of interest (also referred to herein as distribution types 552E). The compressed multidimensional data profile 552G is generated through a series of interactions of the individual user with the user interface 504, and can be based in part on the relative importance that the individual user assigns for each distribution type 552E. For example, the relative importance assigned to a particular distribution type 552E can be based on (e.g., proportional to) the number of interactions by the user in building up or used as input to form a behavioral leaning (inclination value range 552F). The set or collection of distribution types 552E used to generate a compressed multidimensional data profile 552G can be case-specific or customized to the individual user.

Each individual user can be represented by an inclination value range 552F, which is a numerical distribution whose endpoints (i.e., maximum and minimum values) are predefined, for example, using one or more labels. A compressed multidimensional data profile 552G can include a set of inclination value ranges 552F, and is generated using "evidence" drawn from behaviors of individual users. As used herein, "evidence" is a behavioral choice or action of an individual user where that behavioral choice or action has been translated into a prompt-response signal (i.e., a pairing of one or more prompts 552B of FIG. 5 with one or more associated responses 552C) and mapped to a distribution type (e.g., distribution types 552E in FIG. 5), for example, based on a predefined set of rules. For example, if an individual user responds to a question (or "prompt") regarding whether he/she perceives a strong connection between the individual user's core purpose and their daily activities with a response of "yes," the question-answer pair (or prompt-response pair) can be translated into a positive prompt-response signal that is mapped to a particular distribution type. Evidence can be based on the occurrence of any action taken by an individual user, whether such an action is taken in response to an explicit prompt or not (e.g., scheduling a meeting without being prompted, providing feedback to an employee without being prompted, etc.). Through engagement of the individual user with the compute device 501, a set of prompt-response signals is generated, and each prompt-response signal of the set of prompt-response signals is mapped to one or more associated inclination values 552F of one or more compressed multidimensional data profiles 552G as described above.

In some embodiments, a multidimensional profile of an individual user is generated concurrently with, or after, the deployment of an interactive survey instrument (e.g., via the system 100 of FIG. 1B) or other manner of presenting prompts to individual users and receiving response from the individual users in response to the prompt. The multidimensional profile of an individual user is generated based on at least one of: (1) an adjusted weight for a link between at least one response from a plurality of responses and an associated interactive prompt from a plurality of interactive prompts, (2) a dimension identified based on the at least one response, or (3) a classification identified for the at least one response based on the at least one dimension. Because the prompts can be generated based on discrete network resources retrieved from one or more of multiple networked databases and/or compute devices, and because the responses are generated from a common survey instrument or survey session (and, accordingly, stored within a common data record in a memory of the system), the multidimensional profile represents a compressed plurality of data clusters associated with multiple networked database systems.

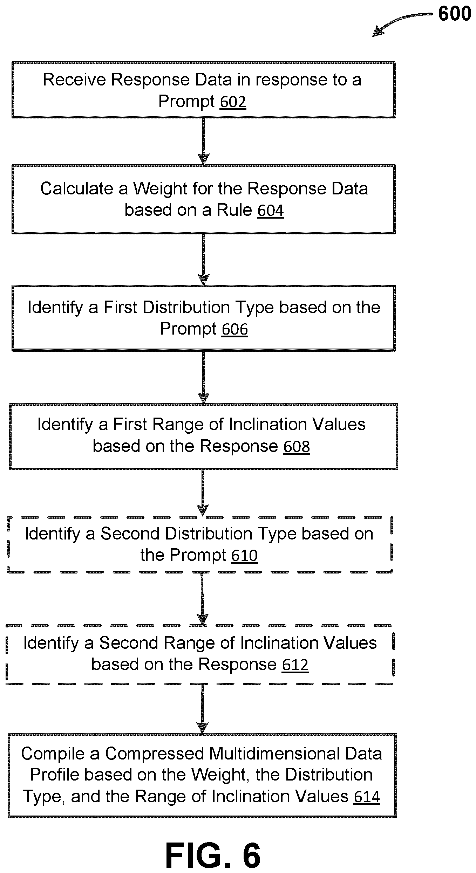

FIG. 6 is a flow diagram illustrating a method for data compression, compatible with the compute device 501 of FIG. 5, according to an embodiment. As shown in FIG. 6, a method 600 includes receiving, at a processor (such as translation processor 550 of FIG. 5, for example via a user interface 504), response data associated with an individual user at 602 and including a digital representation of a prompt and a digital representation of a response associated with the prompt. The processor calculates a weight associated with the response data, based on a rule (or set of rules), at 604. The rule can be based on a credibility of the prompt-response data, a credibility of a source of the prompt-response data, and/or a level of uncertainty inherent in a pre-existing multidimensional profile for the individual user. The credibility of the prompt-response data or the credibility of the source of the prompt-response data can be determined by the individual user associated with the prompt-response data. For example, prompt-response data based on hearsay can have a lower credibility (and an associated lower weight) than prompt-response data based on observations. The weight assigned to prompt-response data can be based on an analytical / formulaic assessment of the credibility, based on a subjective assignment by the individual user or based on a combination. For example, credibility of prompt-response data initially can be subjectively assigned by an individual user (and then an associated weight subsequently assigned), and later then subjective assignment of credibility by the individual user can be calculated (or determined) by an analytical / formulaic assessment of the credibility (and associated weight).

At 606, the processor identifies and/or retrieves from memory a first distribution type based on and/or associated with the prompt. The processor then identifies and/or retrieves from memory a first range of inclination values based on the digital representation of the response, at 608. Based on the weight, the first distribution type, and the first range of inclination values, the processor assembles or compiles a compressed multidimensional data profile at 614. In some embodiments, prior to the processor compiling a compressed multidimensional data profile at 614, the processor identifies a second distribution type based on and/or associated with the digital representation of the prompt, at 610, and identifies a second range of inclination values based on the response, at 612. In other words, a single prompt can have more than one distribution type associated with it. In such cases, the processor then compiles a compressed multidimensional data profile at 614 based on the weight, the first distribution type, the second distribution type, the first range of inclination values, and the second range of inclination values.

In some embodiments, the prompt-response data received at the processor during method 600 is a first prompt-response data, and the method 600 further includes receiving a second prompt-response data including a digital representation of a second prompt and a digital representation of a second response. In such cases, the processor can modify the compressed multidimensional data profile based on the second prompt-response data.

In some embodiments, the processor is configured to present a series of prompts to an individual user via the user interface, and to receive a series responses via the user interface in response to the series of prompts, thereby generating a relatively large number of prompt-response pair data. The processor can then: (1) calculate a set of weights, each weight of the set of weights being uniquely associated with a prompt-response pair from the series of prompt-response pairs; (2) retrieve one or more distribution types (e.g., from memory), each associated (in some implementations, uniquely) with a prompt from the series of prompts; (3) retrieve one or more ranges of inclination values, each associated (in some implementations, uniquely) with a response from the series of responses and its associated distribution type; and (4) define a compressed multidimensional data profile based on the set of weights, the one or more distribution types, and the one or more ranges of inclination values.

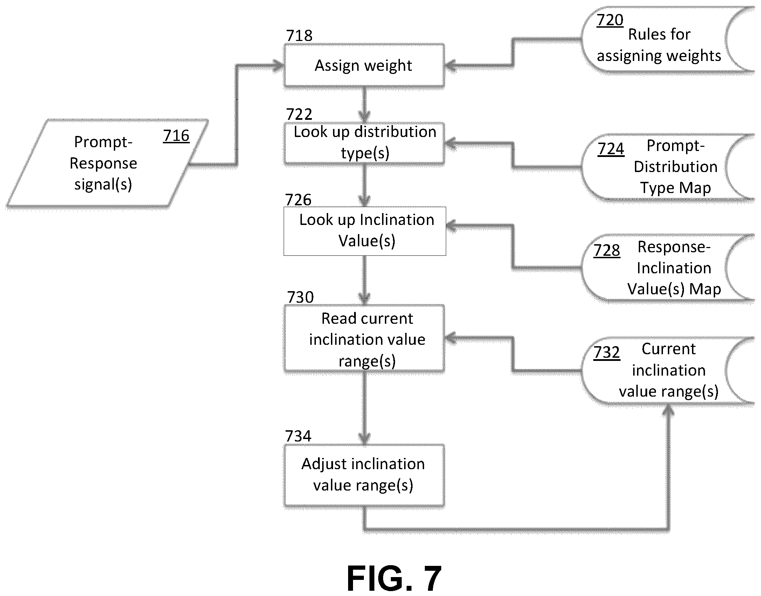

An inclination value range, or "mindset leaning distribution," is a representation of an individual user's attitudes or leanings for a given distribution type (i.e., along a given mindset dimension). Inclination value ranges are computed by aggregating weighted prompt-response data into numerical values using pre-specified mappings, thereby transforming the prompt-response data into a compressed form that can be efficiently processed. To transform prompt-response data into inclination value ranges, each prompt, or event/situation that the individual user responded to, is mapped to one or more distribution types, and each response (or group of responses) to a particular prompt is mapped to a range of inclination values along the one or more distribution types. In some embodiments, inclination value ranges are represented as normalized distributions over numerical ranges. Inclination value ranges can have distributions that are unimodal or multimodal. A method of generating an inclination value range, according to an embodiment, is shown in FIG. 7.

As shown in FIG. 7, one or more prompt-response signals are received (e.g., at a processor and via a user interface such as interface 504 of FIG. 5 or user interface 104 of FIG. 1B), based on an action (or inaction) of an individual user, at 716. Each prompt-response signal is assigned a weight via a translation processor (such as translation processor 550 of FIG. 5), at 318, based on one or more rules for assigning weights 720. The rules for assigning weights 720 can specify predetermined weights associated with a prompt and/or a response of the prompt-response signal. Alternatively or in addition, the rules for assigning weights 720 can assign or modify weights based on a source of the prompt-response signal, a predetermined credibility of the source of the prompt-response signal, or on a level of uncertainty of a current associated compressed multidimensional data profile and/or associated inclination value range. The translation processor looks up one or more distribution types (also referred to herein as "mindset dimensions") associated with a prompt of the prompt-response signal, at 722, by accessing a prompt-distribution type map 724 stored in memory. The prompt-distribution type map 724 (also referred to as a "prompt-dimension map") can be implemented, for example, in a lookup table that links / maps a particular prompt of (or prompt value from) the prompt-response signal to a particular distribution type ("mindset dimension). The translation processor also looks up one or more inclination values associated with a response of the prompt-response signal, at 726, by accessing a response-inclination value map 728 (e.g., stored in memory). The response-inclination value map 728 can also be implemented, for example, in a lookup table that links / maps a particular response of (or response value from) the prompt-response signal to a particular inclination value (leaning value). One or more current inclination value ranges associated with the individual user and with the prompt-response signal is retrieved or "read," at 730, from a table of current inclination value ranges 732 stored in the memory. At 734, the translation processor adjusts the one or more inclination value ranges retrieved at 730, based on the weight assigned at 718, the distribution type(s) retrieved at 722, the inclination value(s) retrieved at 726, and the current inclination value range(s) retrieved at 730. The adjusted inclination value range(s) are then stored in the memory, for example by replacing what was previously the "current inclination value range(s)," or by adding the adjusted inclination value range(s) as a separate record in the memory. The adjusted inclination value range(s), optionally in combination with other previously stored inclination value range(s), can subsequently be used by the translation processor to generate an adjusted compressed multidimensional data profile. An individual user's compressed multidimensional data profile can include a collection or consolidation of inclination value ranges along multiple distribution types.

In some embodiments, a method for dynamically adjusting the strength of links within a directional graph is performed (using a system such as the computer-implemented system 100 of FIG. 1B) as a guided conversation. In some embodiments, a system for measuring core purpose is configured to generate a first spanning tree at a first time and in response to a first set of responses received from a plurality of individual users of the system, and to generate a second spanning tree (different from the first spanning tree) at a second time after the first time in response to a second set of responses received from the plurality of individual users of the system.

In some embodiments, a system for measuring core purpose is configured to generate a spanning tree based on an initial set of responses received from a plurality of individual users of the system, and subsequently, to adaptively and iteratively modify the spanning tree based on subsequently-received responses received from the plurality of individual users of the system. In other words, the spanning tree can be modified based on "feedback" generated within the system. The subsequently-received responses can be received at or within the system due to voluntary input(s) made by one or more of the individual users, and/or in response to a reminder (e.g., generated using artificial intelligence (AI)) provided to the one or more of the individual users to provide additional responses.

In some embodiments, a system for measuring core purpose is configured to present, via one or more displays thereof (e.g., GUIs, dashboards, etc.), representations of: individual core purpose(s), core purpose(s) of the organization, connectivity (or quantified connection strength) between individual core purpose(s) and discrete tasks, connectivity between core purpose(s) of the organization and discrete tasks, connectivity between individual core purpose(s) and one or more strategies, and/or connectivity between core purpose(s) of the organization and one or more strategies. Examples of discrete tasks can include, but are not limited to, calendar events, work assignments, documents, emails, meetings, etc. The displayed information can be used to communicate relative degrees of purpose connectivity (also referred to herein as a "purpose utilization metric") among individual users, with regard to each user's perceived or actual connectivity to their individual core purpose(s) and/or to the core purpose(s) of the organization. The system can be configured to detect a "mismatch" of purpose connectivity (e.g., a purpose connectivity below a predefined threshold level) for one or more individual users, and in response to detecting the mismatch, send a signal to cause one or more remediation actions to be implemented. Examples of remediation actions include, but are not limited to: removal of one or more events from the calendar(s) of the one or more individual users, rescheduling of one or more events within the calendar(s) of the one or more individual users, reallocation of one or more resources (e.g., computing resources, work assignments, etc.) of the one or more individual users, launching a survey at a compute device of the one or more individual users, cause display of one or more prompts (e.g., via a user interface) to the one or more individual users, etc.

In some embodiments, a system for measuring core purpose is configured to compute quantitative measurements of individual core purpose(s), core purpose(s) of the organization, connectivity (or quantified connection strength) between individual core purpose(s) and discrete tasks, connectivity between core purpose(s) of the organization and discrete tasks, connectivity between individual core purpose(s) and one or more strategies, connectivity between core purpose(s) of the organization and one or more strategies. The system can also generate labels or other descriptors (e.g., using natural language processing ("NLP")) and store associations between the labels or other descriptors and the quantitative measurements in a memory of the system. The labels or other descriptors can represent individual core purpose(s), core purpose(s) of the organization, activities, tasks, etc. The quantitative measurements and/or the descriptors can be used to automatically generate a digital footprint for each individual user, and the digital footprints can be used, for example, to assess compatibility between individual users. Alternatively or in addition, quantitative measurements and/or the descriptors can be used as a basis for comparing multiple resource allocation scenarios, or for optimizing one or more resource allocation scenarios. When comparing multiple resource allocation scenarios, a resource allocation scenario may be automatically selected based on the comparison, and in response to the automatic selection, one or more actions may be automatically be deployed (e.g., assigning a work assignment to one or more individual users, modifying a schedule of one or more individual users, etc.).

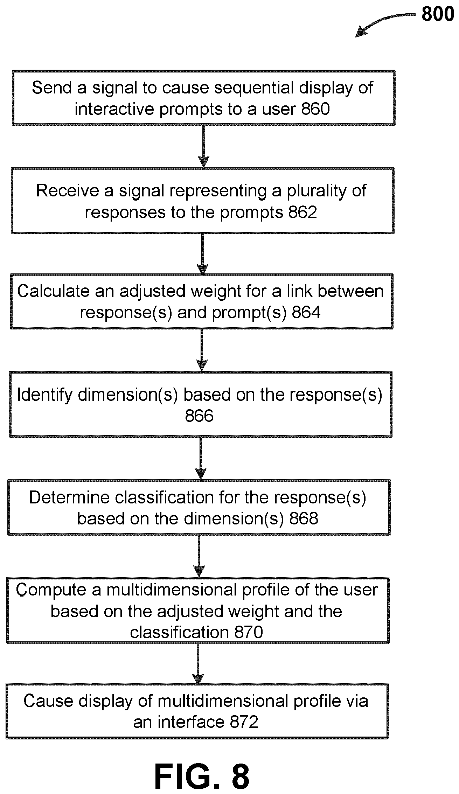

FIG. 8 is a flow chart illustrating a computer implemented method 800 for soliciting user responses and computing a multidimensional profile of the user, according to an embodiment. The method 800 of FIG. 8 can be implemented, for example, by one or more compute devices such as compute device 501 of FIG. 5. As shown in FIG. 8, the method includes sending, at 860, from a processor and via a communications network, a signal to cause sequential display of a plurality of interactive prompts to a user. At 862, at least one signal representing a plurality of responses is received, at the processor, via the communications network, and in response to the user interacting with the plurality of interactive prompts. An adjusted weight is calculated at 864, for a link between the at least one response from the plurality of responses and an associated interactive prompt from the plurality of interactive prompts. At least one dimension is identified at 866 based on the at least one response, and a classification for the at least one response is determined at 868 based on the at least one dimension. A multidimensional profile of the user is computed at 870 based on the adjusted weight and the classification, and a representation of the multidimensional profile of the user is displayed, at 872, via a user interface within the communications network.

In some implementations, calculating the adjusted weight is performed according to:

$$W(j.k) \mathrel{+}= (a/N) * w(j,k),$$

where "W(j,k)" is the adjusted weight, "a" is an adjustment parameter (e.g., +1 or -1, depending on the at least one response), "N" is a cumulative number of responses of the at least one response, w(j,k) is an initial weight associated with the at least one response, and "+=" is an addition assignment operator.

In some implementations, the method 800 also includes receiving, at the processor and via the communications network, multiplexed data from a plurality of operational systems, the computing the multidimensional profile being further based on the multiplexed data.

In some implementations, the method 800 also includes receiving, from a multiplexer, extracted data from a plurality of discrete network resources, the computing the multidimensional profile being further based on the extracted data.

In some implementations, the method 800 also includes determining a characterization parameter for the user based on at least one of the at least one response or the multidimensional profile. The characterization parameter can include one or more of: a core purpose of the user, a connectivity between a core purpose of an organization associated with the user and a task associated with the user, a connectivity between a core purpose of the user and a task associated with the user, and a connectivity between a core purpose of the user and a strategy of an organization associated with the user.

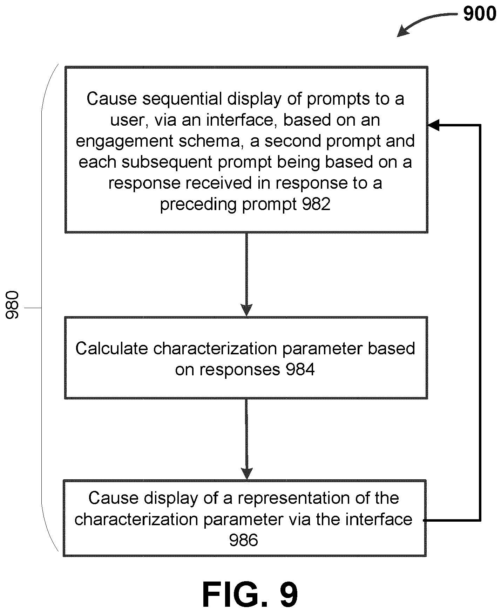

FIG. 9 is a flow chart illustrating a computer implemented method 900 for soliciting user responses and calculating a characterization parameter, according to an embodiment. The method 900 of FIG. 9 can be implemented, for example, by one or more compute devices such as compute device 501 of FIG. 5. As shown in FIG. 9, the processor-implemented method 900 includes iteratively assessing, at 980 and via a processor, a characterization parameter for a user within an organization. The iterative assessment 980 includes causing sequential display, at 982, of a plurality of prompts to the user, via a user interface (e.g., user interface 104 of FIG. 1B), based on an engagement schema, a second prompt and each subsequent prompt from the plurality of prompts being based on a response, from a plurality of responses, received in response to a preceding prompt from the plurality of prompts. The iterative assessment 980 also includes calculating the characterization parameter at 984 based on the plurality of responses, and causing display at 986 of a representation of the characterization parameter via the user interface. In some implementation, the engagement schema includes a spanning tree algorithm.

In some implementations, the characterization parameter includes one or more of: a core purpose of the user, a connectivity between a core purpose of an organization associated with the user and a task associated with the user, a connectivity between a core purpose of the user and a task associated with the user, and a connectivity between a core purpose of the user and a strategy of an organization associated with the user.

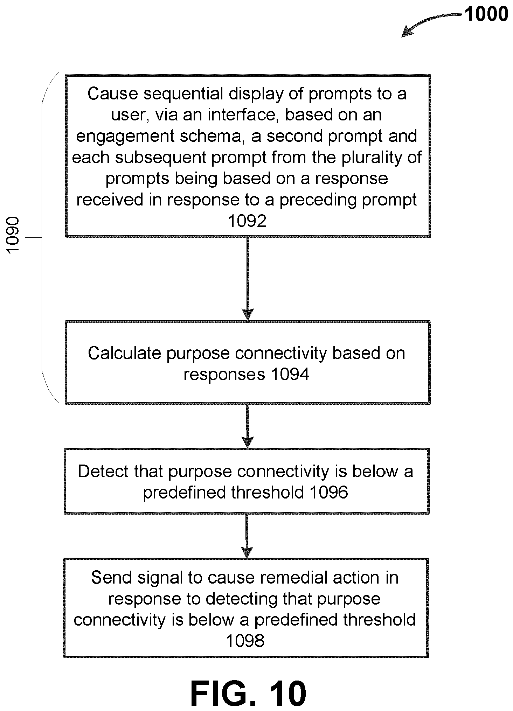

FIG. 10 is a flow chart illustrating a computer implemented method 1000 for quantifying purpose connectivity and causing remedial actions to be performed, according to an embodiment. The method 1000 of FIG. 10 can be implemented, for example, by one or more compute devices such as compute device 501 of FIG. 5. As shown in FIG. 10, the method 1000 includes assessing, at 1090 and via a processor, a purpose connectivity for a user within an organization. The assessing 1090 includes sequentially displaying, at 1092, a set of prompts to the user, via a user interface, and based on an engagement schema. A second prompt and each subsequent prompt from the set of prompts is based on a response, from a set of responses, received in response to a preceding prompt from the set of prompts. The assessing 1090 also includes calculating, at 1094, the purpose connectivity based on the plurality of responses. The method 1000 also includes, at 1096, detecting that the purpose connectivity is below a predefined threshold 1096, and in response to detecting that a value of the purpose connectivity is below a predefined threshold, sending a signal at 1098 to cause a remedial action. The remedial action can include one or more of: removing of an event from a calendar associated with the user, rescheduling an event within the calendar associated with the user, reallocating a computing resource associated with the user, modifying a work assignment associated with the user, launching a survey at a compute device of the user, or displaying a message via a user interface of the user. The purpose connectivity can include at least one of: a connectivity between a core purpose of an organization associated with the user and a task associated with the user, a connectivity between a core purpose of the user and a task associated with the user, a connectivity between a core purpose of the user and a strategy of an organization associated with the user.

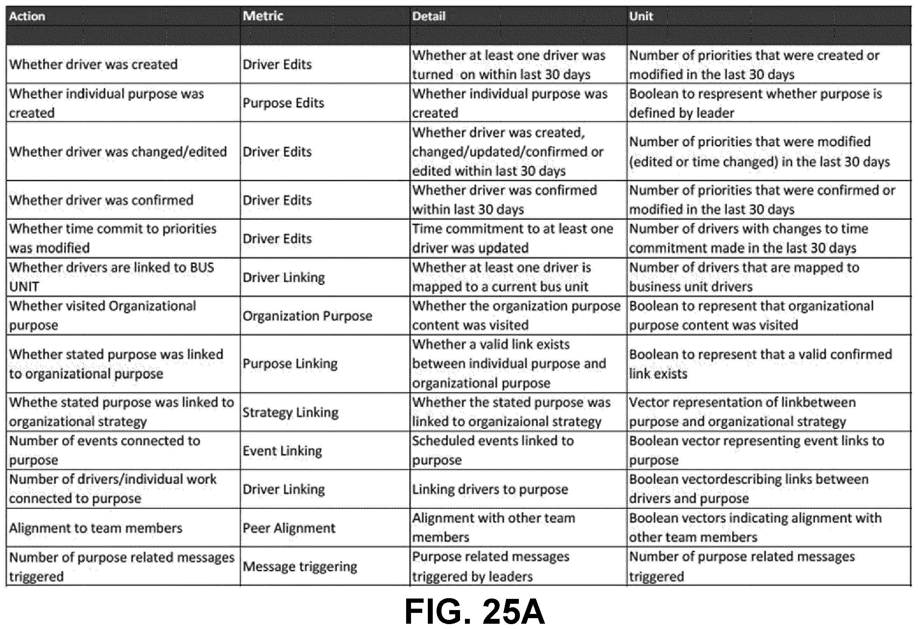

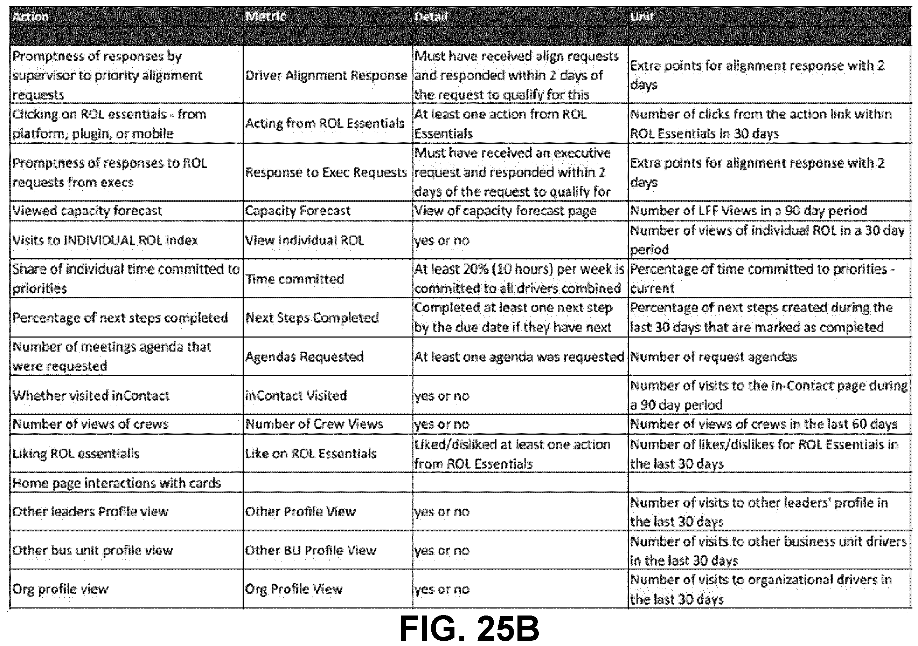

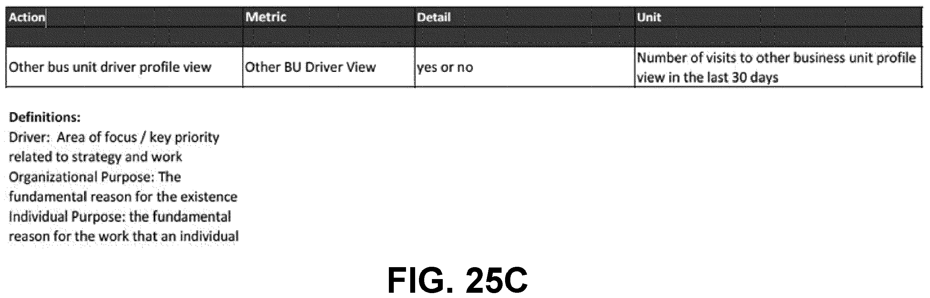

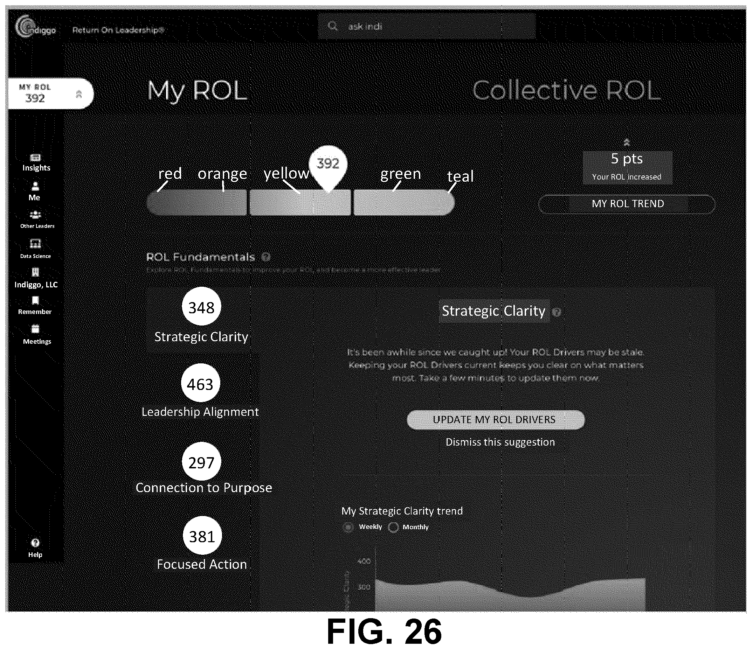

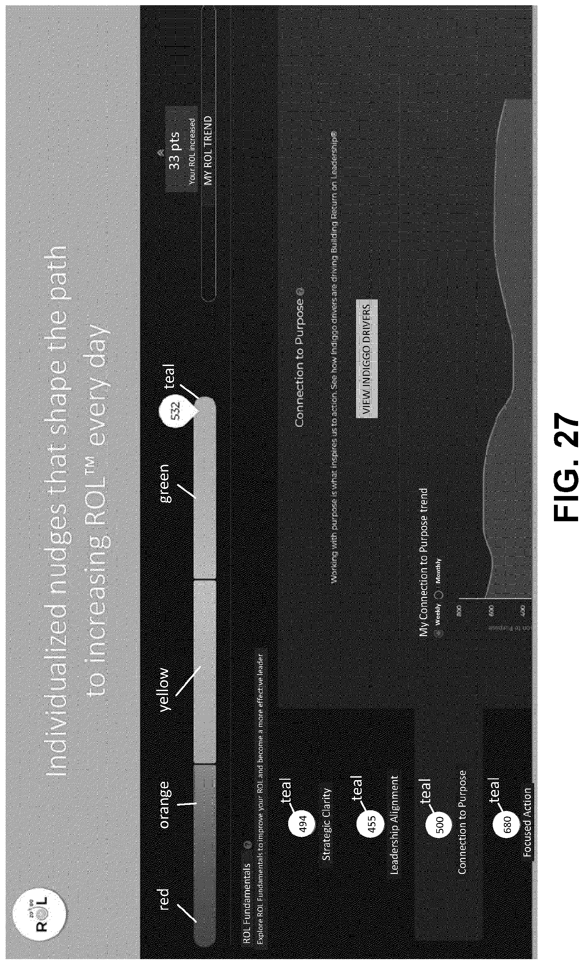

FIGS. 25A-25C show a table of examples of metrics that can be generated and tracked (in any combination) by systems of the present disclosure, and used in methods of the present disclosure (e.g., as a basis for generating individualized "workprints," and/or as a basis for generating scores for individuals). The coefficients and weights for the metrics of FIGS. 25A-25C can be calibrated based on user inputs collected, for example, via one or more surveys. Additional details and embodiments of some systems and methods set forth herein are provided in FIGS. 26-38.

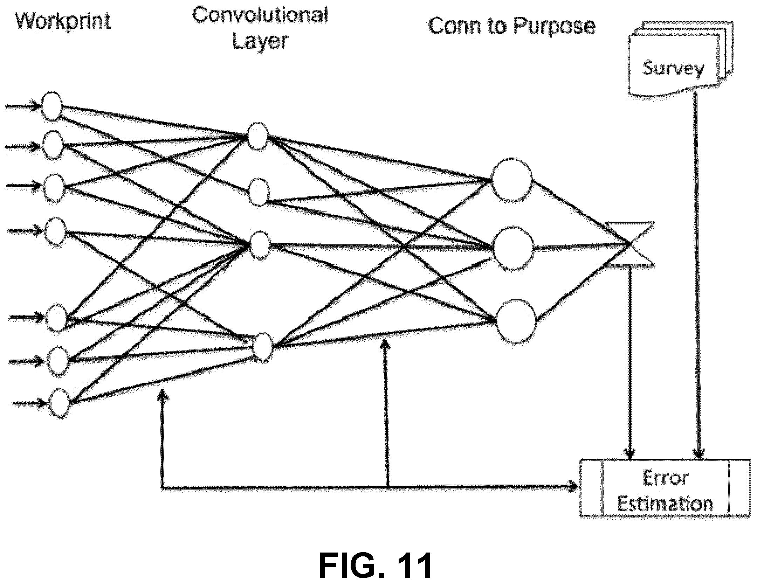

FIG. 11 is a diagram of an example neural network, suitable for performing calibrations (an example of which is provided below) of the present disclosure, according to an embodiment.

In some embodiments, a processor-implemented method includes sending, from a processor and via a communications network, a signal to cause sequential display of a plurality of interactive prompts to a user. The method also includes receiving, at the processor, via the communications network, and in response to the user interacting with the plurality of interactive prompts, at least one signal representing a plurality of responses. The method also includes calculating an adjusted weight for a link between the at least one response from the plurality of responses and an associated interactive prompt from the plurality of interactive prompts. The method also includes identifying at least one dimension based on the at least one response, and determining a classification for the at least one response based on the at least one dimension. The method also includes computing a multidimensional profile of the user based on at least one of the adjusted weight, the at least one dimension, and the classification, the multidimensional profile representing a compressed plurality of data clusters associated with multiple networked database systems. The method also includes causing display of a representation of the multidimensional profile of the user via a user interface within the communications network.

In some embodiments, calculating the adjusted weight is performed according to:

$$W(j.k) \mathrel{+}= (a/N) * w(j,k),$$

where "W(j,k)" is the adjusted weight, "a" is an adjustment parameter (e.g., +1 or -1, depending on the at least one response), "N" is a cumulative number of responses of the at least one response, w(j,k) is an initial weight associated with the at least one response, and "+=" is an addition assignment operator.

In some embodiments, the processor-implemented method also includes receiving, at the processor and via the communications network, multiplexed data from a plurality of operational systems, wherein the computing the multidimensional profile is further based on the multiplexed data.

In some embodiments, the processor-implemented method also includes receiving, from a multiplexer, extracted data from a plurality of discrete network resources, the computing the multidimensional profile being further based on the extracted data.

In some embodiments, the processor-implemented method also includes determining a characterization parameter for the user based on at least one of the at least one response or the multidimensional profile. In some such embodiments, the characterization parameter can be a core purpose of the user. In other such embodiments, the characterization parameter is a connectivity between a core purpose of an organization associated with the user and a task associated with the user. In still other such embodiments, the characterization parameter is a connectivity between a core purpose of the user and a task associated with the user. In still other such embodiments, the characterization parameter is a connectivity between a core purpose of the user and a strategy of an organization associated with the user.

In some embodiments, a processor-implemented method includes iteratively assessing, via a processor, a characterization parameter for a user within an organization, by iteratively: (1) causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts, (2) calculating the characterization parameter based on the plurality of responses, and (3) causing display of a representation of the characterization parameter via the user interface.

In some embodiments, the engagement schema includes a spanning tree algorithm.

In some embodiments, the characterization parameter is a core purpose of the user. In other embodiments, the characterization parameter is a connectivity between a core purpose of an organization associated with the user and a task associated with the user. In still other embodiments, the characterization parameter is a connectivity between a core purpose of the user and a task associated with the user. In still other embodiments, the characterization parameter is a connectivity between a core purpose of the user and a strategy of an organization associated with the user.

In some embodiments, a processor-implemented method includes assessing, via a processor, a purpose connectivity for a user within an organization, by (1) causing sequential display of a plurality of prompts to the user, via a user interface, based on an engagement schema, a second prompt and each subsequent prompt from the plurality of prompts being based on a response, from a plurality of responses, received in response to a preceding prompt from the plurality of prompts, and (2) calculating the purpose connectivity based on the plurality of responses. The processor-implemented method also includes detecting that a value of the purpose connectivity is below a predefined threshold, and sending a signal, in response to detecting that the value of the purpose connectivity is below the predefined threshold, to cause a remedial action.

In some embodiments, the remedial action includes one of: removing of an event from a calendar associated with the user, rescheduling an event within the calendar associated with the user, reallocating a computing resource associated with the user, modifying a work assignment associated with the user, launching a survey at a compute device of the user, or displaying a message via the user interface of the user.

In some embodiments, the purpose connectivity is a connectivity between a core purpose of an organization associated with the user and a task associated with the user.

In some embodiments, the purpose connectivity is a connectivity between a core purpose of the user and a task associated with the user.

In some embodiments, the purpose connectivity is a connectivity between a core purpose of the user and a strategy of an organization associated with the user.

In some embodiments, a method includes performing a calibration, via a processor and during a first time period, by: (1) receiving, at a first time and for each user from a plurality of users, a plurality of inputs made by that user via a graphical user interface, (2) automatically retrieving, via the processor, in real time and via a telecommunications network, first activity data associated with each user from the plurality of users, the first activity data including data associated with at least one software application accessible via the telecommunications network, (3) defining a plurality of profile types based on the pluralities of inputs and the first activity data associated with each user from the plurality of users, each profile type from the plurality of profile types associated with a correlation between a user purpose and a user network-accessed activity, and (4) assigning each user from the plurality of users to one profile type from the plurality of profile types. The method also includes comparing, during a second time period after the first time period and for each user from at least a subset of users from the plurality of users, (i) second activity data associated with that user, and (ii) and the profile type associated with that user. The method also includes tracking, via the processor and based on the comparing, a purpose compliance metric for each user from the at least the subset of users from the plurality of users. The purpose compliance metric can represent a degree of alignment between behavior of that user and the profile type associated with that user. The method also includes repeatedly causing a signal representing the tracked purpose compliance metrics to be sent to a display of a compute device.

In some embodiments, a method includes determining, via a processor, a plurality of profile types based on first activity data associated with a plurality of users within a telecommunications network of an organization, the first activity data including data associated with at least one software application accessible via the telecommunications network, each profile type associated with a correlation between a user purpose and a user network-accessed activity. The method also includes assigning, via the processor, each user from the plurality of users to one profile type from the plurality of profile types. The method also includes comparing, via the processor, (i) second activity data associated with a user from the plurality of users, the second activity data including real time data automatically retrieved via the telecommunications network, and (ii) the profile type associated with that user. The method also includes tracking, via the processor and based on the comparing, a purpose compliance metric for the user. The method also includes iteratively causing a signal representing the tracked purpose compliance metric to be sent to a display of a compute device.

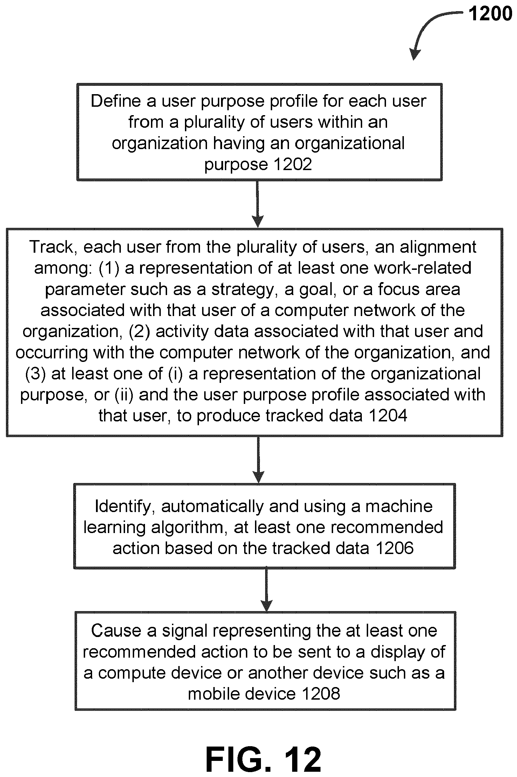

FIG. 12 is a flow diagram illustrating a method for identifying recommended actions based on tracked alignments, according to an embodiment. As shown in FIG. 12, the method 1200 includes defining, via a processor and at 1202, a user purpose profile for each user from a plurality of users within an organization having an organizational purpose. At 1204, an alignment is automatically tracked via the processor and for each user from the plurality of users among: (1) a representation of at least one work-related parameter such as a strategy, a goal, or a focus area associated with that user of a computer network of the organization, (2) activity data associated with that user and occurring with the computer network of the organization, and (3) at least one of (i) a representation of the organizational purpose, or (ii) and the user purpose profile associated with that user, to produce tracked data. At 1206, at least one recommended action is automatically identified via the processor and using a machine learning algorithm, based on the tracked data. At 1208, the method includes causing a signal representing the at least one recommended action to be sent to a display of a compute device or another device such as a mobile device.

In some implementations, the at least one recommended action includes a recommended calendar activity.

In some implementations, the tracking includes detecting a pattern of behavior, and the identifying the at least one recommended action is based on the pattern of behavior.

In some implementations, the tracking includes detecting one of an event, a choice or an action by a user, and the identifying the at least one recommended action is based on the detected one of the event, the choice, or the action.

In some implementations, the method 1200 also includes causing a signal to be sent to at least one of the display of the compute device or a display of another device, to cause display of a representation of the alignment, the representation of the alignment including at least one of a graphical representation or a numerical representation.

In some implementations, the method 1200 also includes assigning one of a goal, an action, a meeting, or a priority to at least one of an individual purpose or an organizational purpose to produce a connection metric, and causing a signal representing the connection metric to the display of the compute device or another device.

In some implementations, the method 1200 also includes assigning a priority, a goal, an action, or a meeting to at least one activity associated with the activity data, and the identifying the least one recommended action is further based on the priority.

In some implementations, the method 1200 also includes assigning a classification to at least one activity associated with the activity data, and causing a signal representing the classification of the at least one activity to be sent to the display of the compute device.

In some implementations, the method 1200 also includes assigning a classification to at least one activity associated with the activity data, the identifying the least one recommended action being further based on the classification.

In some implementations, the method 1200 also includes assigning a classification and a priority to an activity associated with the activity data, the identifying the least one recommended action being further based on the classification and the priority.

In some implementations, the method 1200 also includes automatically measuring an alignment between the representation of the organizational purpose and at least one of an organizational strategy, a goal, a priority, or a driver. Optionally, the method further includes automatically tracking, via the processor, for each user and from a plurality of users, the alignment between the representation of the organizational purpose, and the at least one of the organizational strategy, the goal, the priority, or the driver. Optionally, the method further includes automatically identifying a modification to the organizational strategy based on a degree of alignment between the organizational purpose and the organizational strategy. Optionally, the method further includes automatically generating a recommended action for at least one user from the plurality of users based on the degree of alignment between the organizational purpose and the organizational strategy. Optionally, the method further includes causing a signal representing the recommended action to be sent to the display of the compute device.

In some implementations, the method 1200, when newly introduced, is integrated within the existing workflow of the plurality of users.

In some implementations, the method 1200 also includes tracking, automatically via the processor and for each user from the plurality of users, a relationship between the organizational purpose and at least one of a goal, a priority, or a focus area of the organization, to generate tracked relationship data, and causing a signal representing the tracked relationship data to be sent to the display of the compute device.

In some implementations, the method 1200 also includes tracking, automatically via the processor and for each user from the plurality of users, a relationship between the organizational purpose and at least one of a goal, a priority, or a focus area of that user, to generate tracked relationship data, and causing a signal representing the tracked relationship data to be sent to the display of the compute device.

In some implementations, the method 1200 also includes tracking, automatically via the processor and for each user from the plurality of users, a relationship between a predefined purpose of that user and at least one of a goal, a priority, or a focus area of that user, to generate tracked relationship data, and causing a signal representing the tracked relationship data to be sent to the display of the compute device.

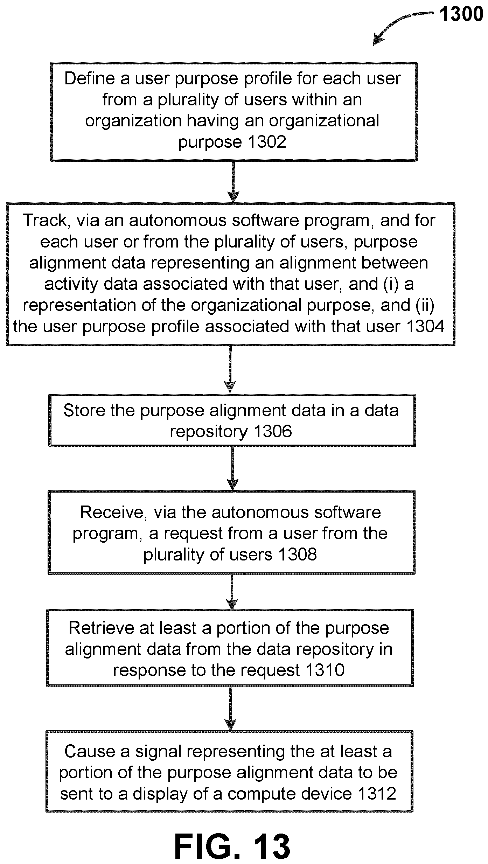

FIG. 13 is a flow diagram illustrating a method for querying and displaying alignment data, according to an embodiment. As shown in FIG. 13, the method 1300 includes defining, at 1302, a user purpose profile for each user from a plurality of users within an organization having an organizational purpose. At 1304, the method 1300 includes tracking, via an autonomous software program running on a processor, and for each user or from the plurality of users, purpose alignment data representing an alignment between activity data associated with that user, and (i) a representation of the organizational purpose, and (ii) the user purpose profile associated with that user. At 1306, the purpose alignment data is stored in a data repository, and at 1308, a request is received from a user from the plurality of users via the autonomous software program running on the processor. At 1310, at least a portion of the purpose alignment data is retrieved from the data repository in response to the request, and at 1312, the method 1300 includes causing a signal representing the at least a portion of the purpose alignment data to be sent to a display of a compute device.

In some implementations, the method 1300 also includes developing, via a machine learning algorithm, at least one representation of a degree of alignment between user actions and at least one of (i) user purpose or (ii) organizational purpose. Optionally, such a method further includes sending, via the autonomous software program, a signal to cause display of the at least one insight within a collaborative software interface.

In some implementations, the data repository includes an autonomous data repository.

In some implementations, the method 1300 also includes identifying, automatically via the processor and using a machine learning algorithm, at least one recommended action based on the tracking, and causing a signal representing the at least one recommended action to be sent to the display of the compute device.

In some implementations, the method 1300 also includes assigning a priority to at least one activity associated with the activity data, the identifying the least one recommended action being further based on the priority.

In some implementations, the method 1300 also includes assigning a classification to at least one activity associated with the activity data, the identifying the least one recommended action being further based on the classification.

In some implementations, the method 1300 also includes assigning a classification and a priority to an activity associated with the activity data, the identifying the least one recommended action being further based on the classification and the priority.

In some implementations, the autonomous software program includes a conversational artificial intelligence (AI) software program.

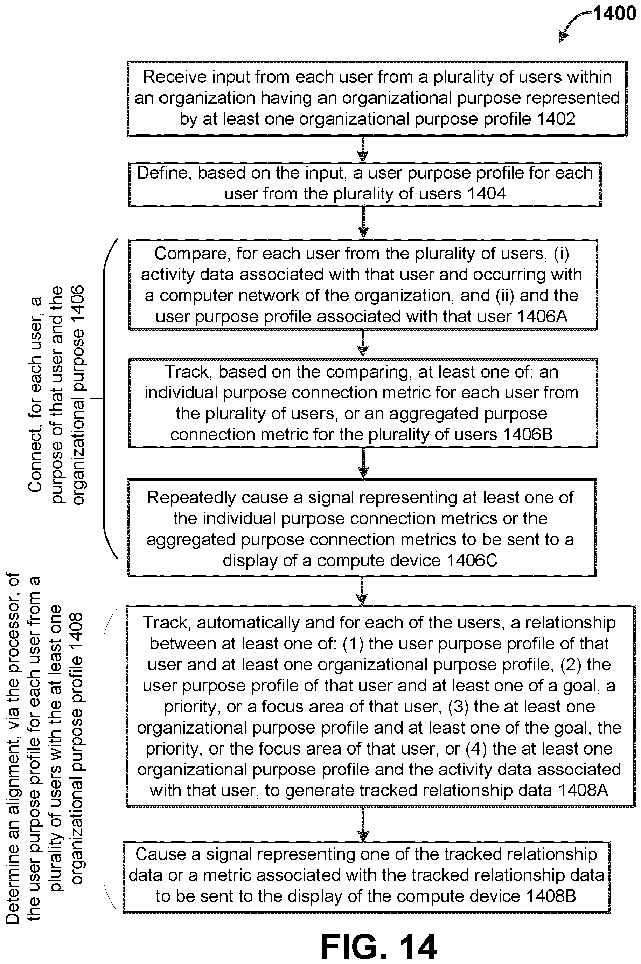

FIG. 14 is a flow diagram illustrating a method for tracking purpose-related metrics and for tracking relationships among one or more purpose profiles, goals, priorities and/or focus areas, according to an embodiment. As shown in FIG. 14, the method 1400 includes receiving input, at 1402, via a processor and from each user from a plurality of users within an organization having an organizational purpose represented by at least one organizational purpose profile. The method 1400 also includes defining, at 1404, via the processor and based on the input, a user purpose profile for each user from the plurality of users, and connecting, at 1406, for each user from the plurality of users, a purpose of that user and the organizational purpose. The connecting the purpose of each user from the plurality of users and the organization purpose includes comparing, at 1406A and for each user from the plurality of users, (i) activity data associated with that user and occurring with a computer network of the organization, and (ii) and the user purpose profile associated with that user. The connecting the purpose of each user from the plurality of users and the organization purpose also includes tracking, at 1406B, via the processor and based on the comparing, at least one of: (1) an individual purpose connection metric for each user from the plurality of users, or (2) an aggregated purpose connection metric for the plurality of users. The connecting the purpose of each user from the plurality of users and the organization purpose also includes repeatedly causing, at 1406C, a signal representing at least one of the individual purpose connection metrics or the aggregated purpose connection metrics to be sent to a display of a compute device. The method 1400 also includes determining an alignment, at 1408 and via the processor, of the user purpose profile for each user from a plurality of users with the at least one organizational purpose profile. The determining the alignment of the user purpose profile for each user from a plurality of users with the at least one organizational purpose profile includes tracking, at 1408A, automatically via the processor and for each user from the plurality of users, a relationship between at least one of: (1) the user purpose profile of that user and at least one organizational purpose profile, (2) the user purpose profile of that user and at least one of a goal, a priority, or a focus area of that user, (3) the at least one organizational purpose profile and at least one of the goal, the priority, or the focus area of that user, or (4) the at least one organizational purpose profile and the activity data associated with that user, to generate tracked relationship data. The determining the alignment of the user purpose profile for each user from a plurality of users with the at least one organizational purpose profile also includes, at 1408B, causing a signal representing one of the tracked relationship data or a metric associated with the tracked relationship data to be sent to the display of the compute device.

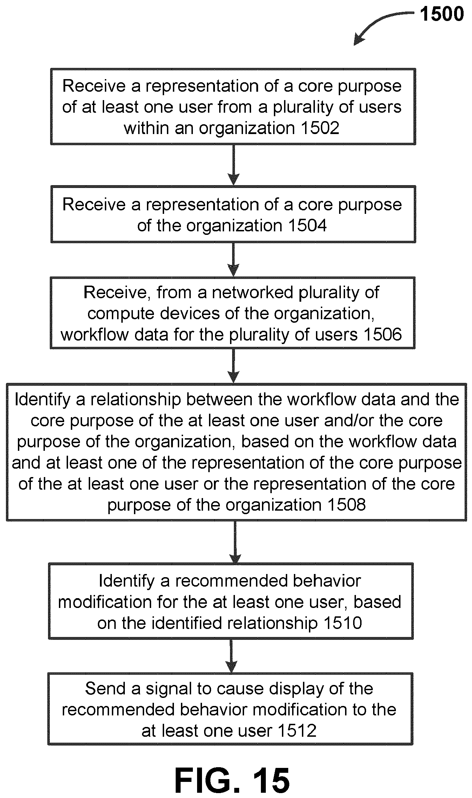

FIG. 15 is a flow diagram illustrating a method for monitoring workflow data and its alignment with core purpose(s), and for identifying a recommended behavior modification, according to an embodiment. As shown in FIG. 15, the method 1500 includes receiving, at 1502 and via a processor, a representation of a core purpose of at least one user from a plurality of users within an organization. At 1504, a representation of a core purpose of the organization is received via the processor, and at 1506, workflow data for the plurality of users is received via the processor and from a networked plurality of compute devices of the organization. The method 1500 also includes identifying, at 1508 and via the processor, a relationship between the workflow data and at least one of the core purpose of the at least one user or the core purpose of the organization, based on the workflow data and at least one of the representation of the core purpose of the at least one user or the representation of the core purpose of the organization. At 1510, a recommended behavior modification is identified for the at least one user, based on the identified relationship, and at 1512, a signal is sent/transmitted to cause display of the recommended behavior modification to the at least one user (e.g., via a graphical user interface (GUI) of a networked compute device).

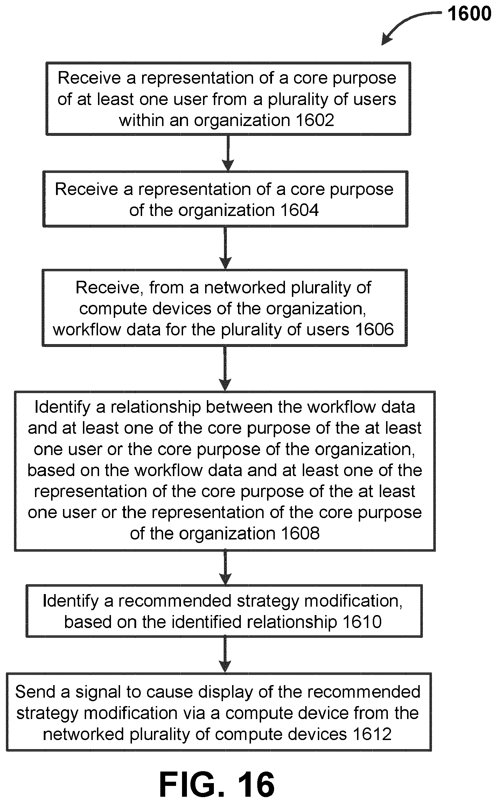

FIG. 16 is a flow diagram illustrating a method for monitoring workflow data and its alignment with core purpose(s), and for identifying a recommended strategy modification, according to an embodiment. As shown in FIG. 16, the method 1600 includes receiving, at 1602 and via a processor, a representation of a core purpose of at least one user from a plurality of users within an organization. At 1604, a representation of a core purpose of the organization is received via the processor, and at 1606, workflow data for the plurality of users is received via the processor and from a networked plurality of compute devices of the organization. The method 1600 also includes identifying, at 1608 and via the processor, a relationship between the workflow data and at least one of the core purpose of the at least one user or the core purpose of the organization, based on the workflow data and at least one of the representation of the core purpose of the at least one user or the representation of the core purpose of the organization. At 1610, a recommended strategy modification is identified, based on the identified relationship, and at 1612, a signal is sent/transmitted to cause display of the recommended strategy modification via a compute device from the networked plurality of compute devices (e.g., via a GUI of a networked compute device).

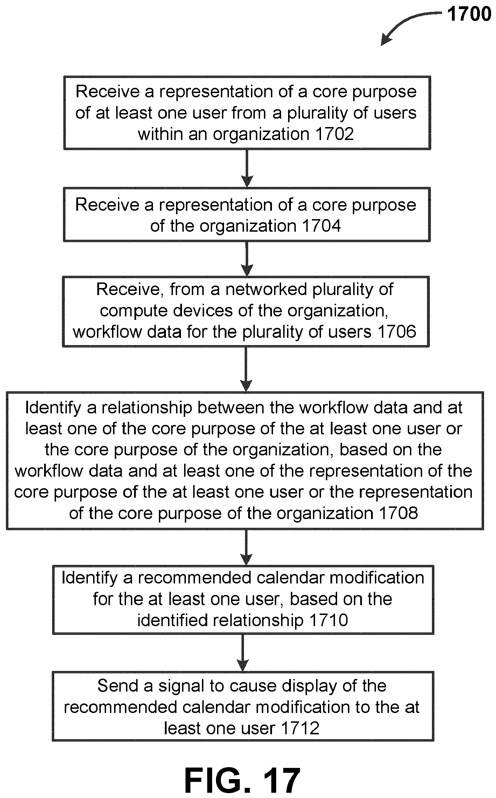

FIG. 17 is a flow diagram illustrating a method for monitoring workflow data and its alignment with core purpose(s), and for identifying a recommended calendar modification, according to an embodiment. As shown in FIG. 17, the method 1700 includes receiving, at 1702 and via a processor, a representation of a core purpose of at least one user from a plurality of users within an organization. The method 1700 also includes receiving, at 1704 and via the processor, a representation of a core purpose of the organization. The method 1700 also includes receiving, at 1706, via the processor and from a networked plurality of compute devices of the organization, workflow data for the plurality of users. At 1708, a relationship between the workflow data and at least one of the core purpose of the at least one user or the core purpose of the organization, is identified via the processor and based on the workflow data and at least one of the representation of the core purpose of the at least one user or the representation of the core purpose of the organization. At 1710, a recommended calendar modification is identified for the at least one user, based on the identified relationship, and at 1712, a signal is sent/transmitted to cause display of the recommended calendar modification to the at least one user (e.g., via a GUI of a networked compute device).

FIGS. 18-20 are screenshots showing a digital communication platform (Microsoft® Teams) and the integration therein of a system ("indi") of the present disclosure, according to an embodiment.

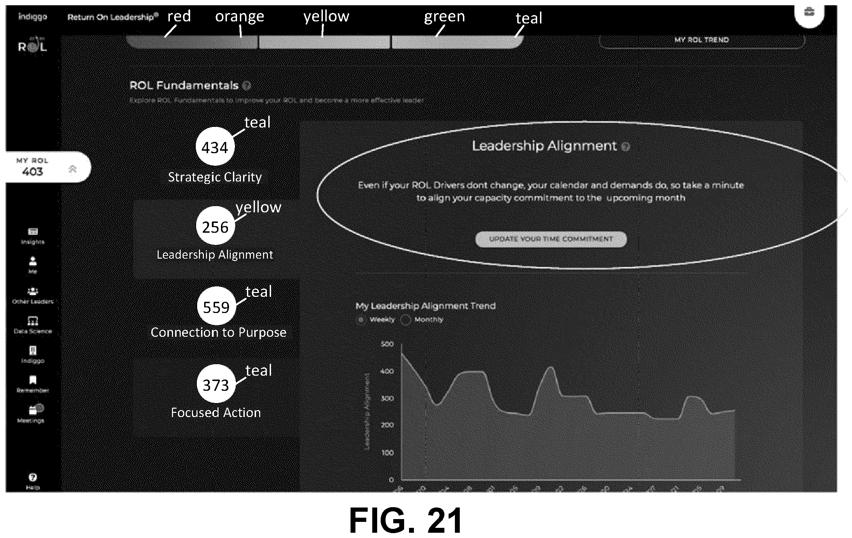

FIGS. 21-22 are example screenshots showing metrics, trends, strategic advice, and system-generated insights provided by the indi system to a user, and user-selectable prompts to update a time commitment to a predefined goal or objective, according to an embodiment.

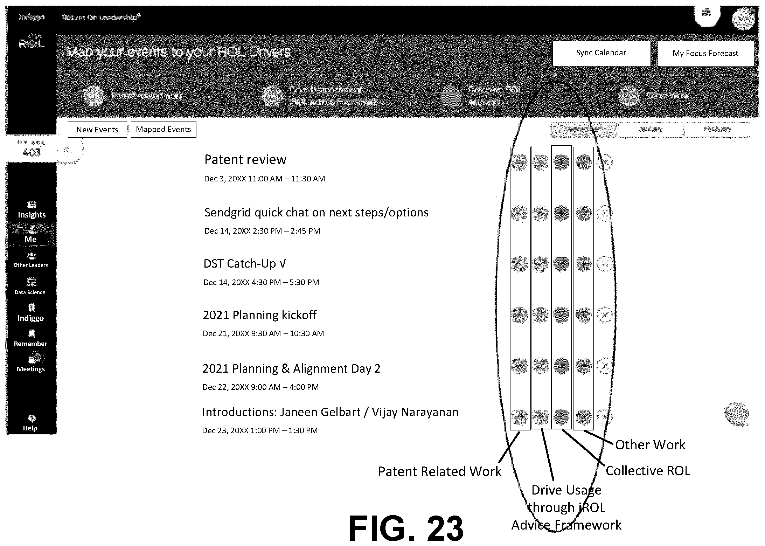

FIG. 23 is an example screenshot showing the automatic assignment of activities and events to priorities/goals, according to an embodiment.

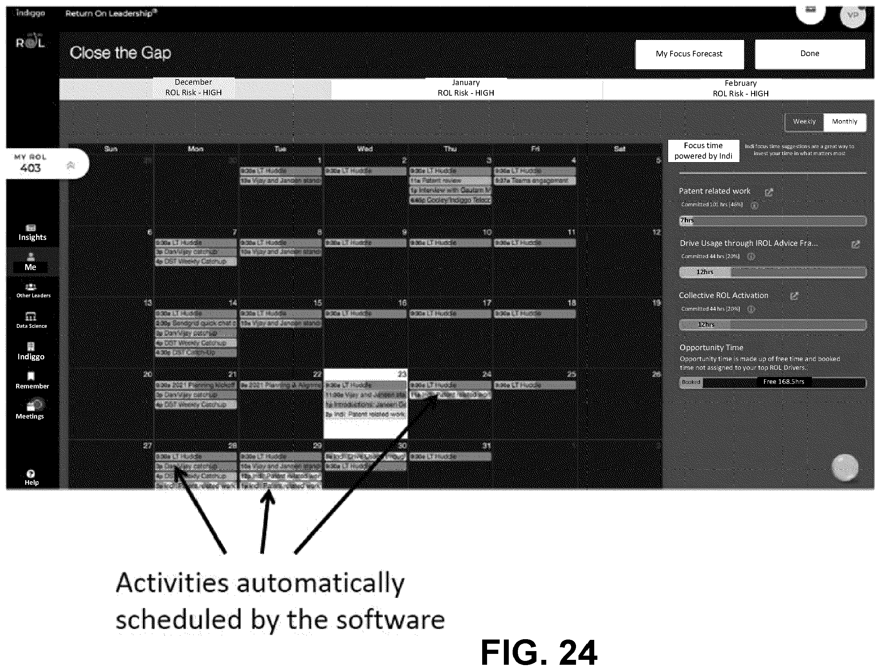

FIG. 24 is an example screenshot showing the automatic scheduling of activities by the indi system, as well as the recommendation of a scheduled activity by the indi system, according to an embodiment.

FIGS. 25A-25C show a table of example metrics that can be generated and tracked, in any combination thereof, according to an embodiment.

FIGS. 26-27 are example screenshots showing metrics, trends, strategic advice, and user-selectable recommendations generated and displayed by the indi system, according to an embodiment.

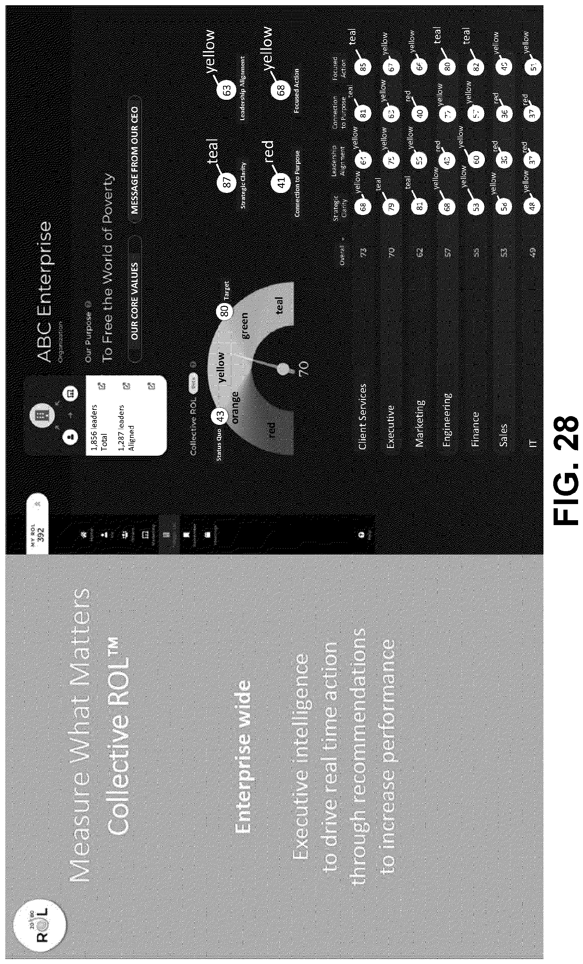

FIG. 28 is an example screenshot showing department-level metrics and a graphical representation of enterprise-level performance, according to an embodiment.

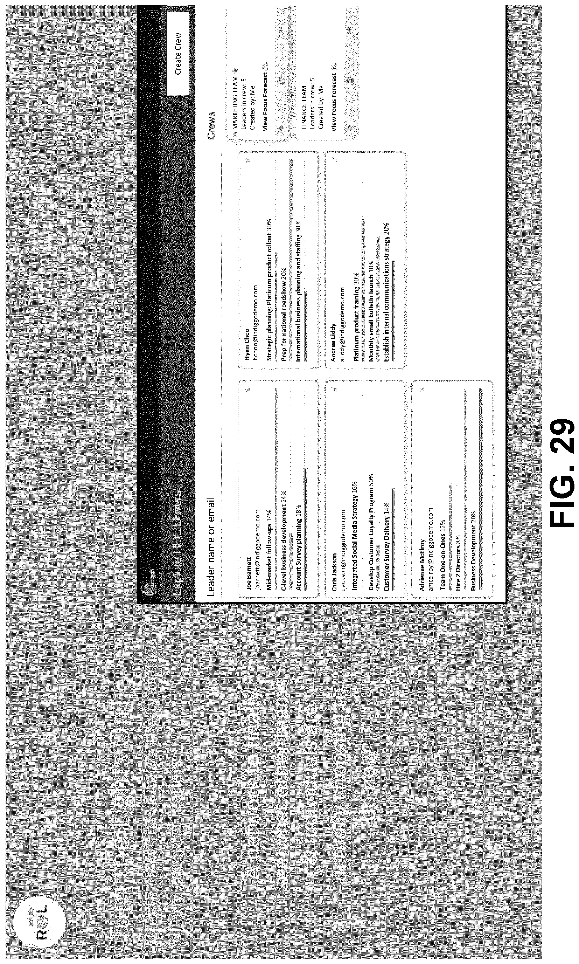

FIG. 29 is an example screenshot showing multiple sets of individual-level metrics, crew (i.e., a group of individuals) information, and a user-selectable object to create a new crew via the indi system and a graphical representation of enterprise-level performance, according to an embodiment.

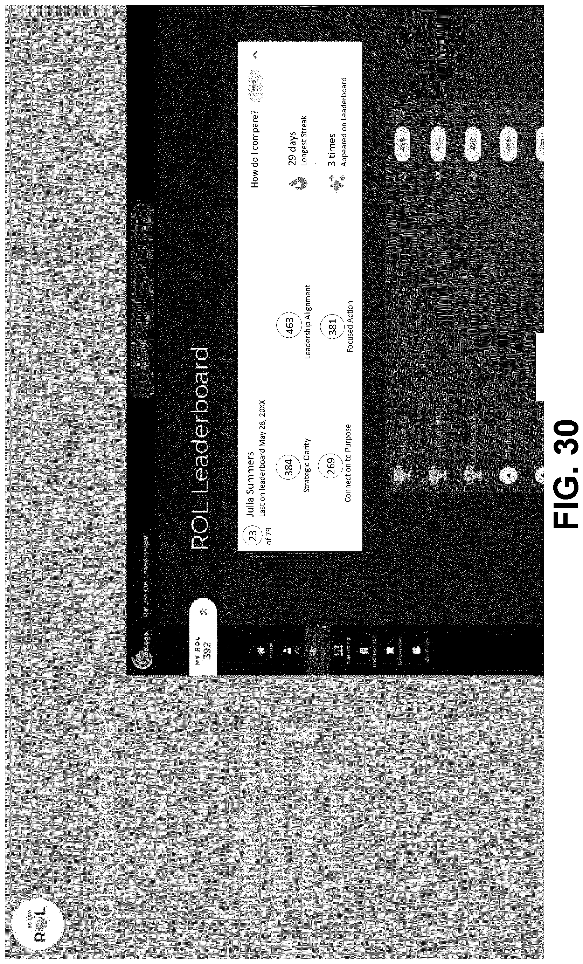

FIG. 30 is an example screenshot showing a leaderboard with aggregate metrics for each of multiple users or individuals within an organization, along with detailed metric data displayed for a selected user or individual, according to an embodiment.

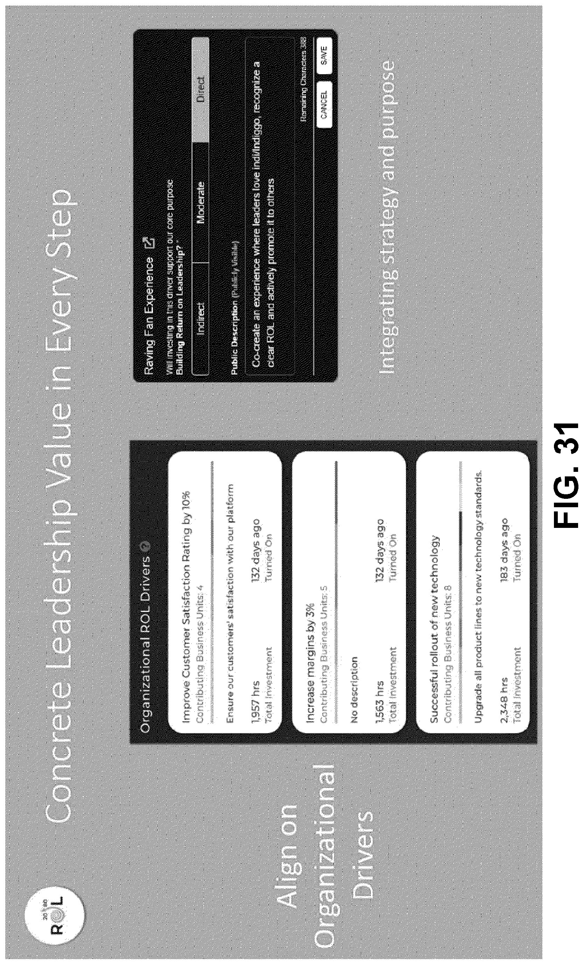

FIG. 31 is an example screenshot showing predefined organizational drivers, with associated numbers of contributing business units, total numbers of hours (e.g., labor hours) invested, and number of days since each organizational driver was initially defined (i.e., when that driver was "turned on"), according to an embodiment.

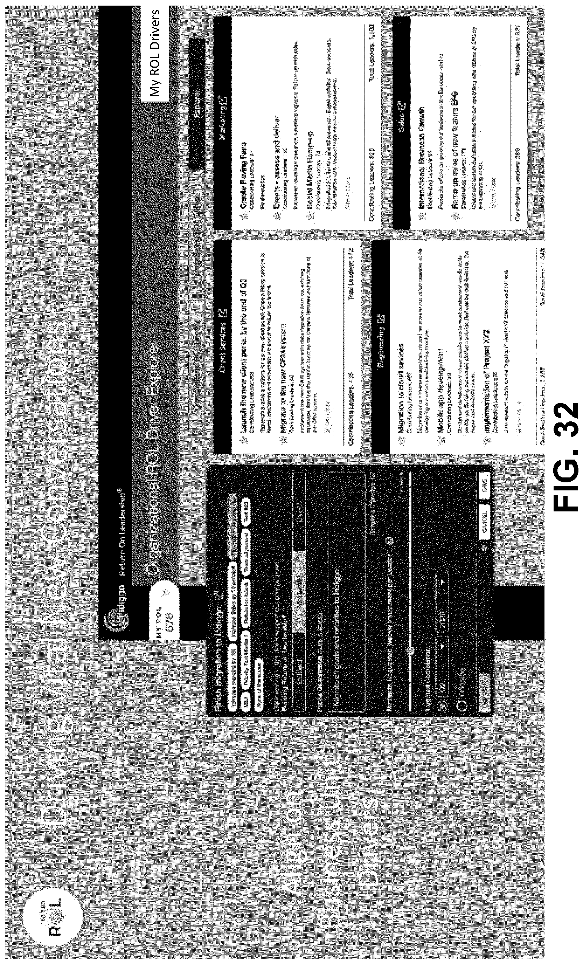

FIG. 32 is an example screenshot showing an "explorer" view, in which a new driver is being defined (in the dark box), and overviews of previously-defined drivers for multiple different business units are shown, according to an embodiment.

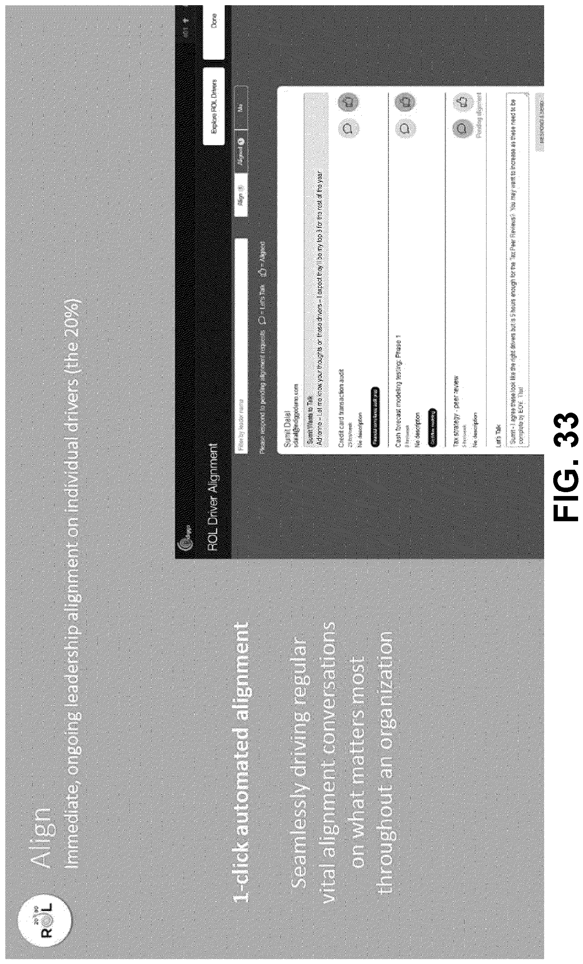

FIG. 33 is an example screenshot showing an example communication within the indi system, where a user is requesting feedback from a colleague regarding their list of drivers, according to an embodiment.

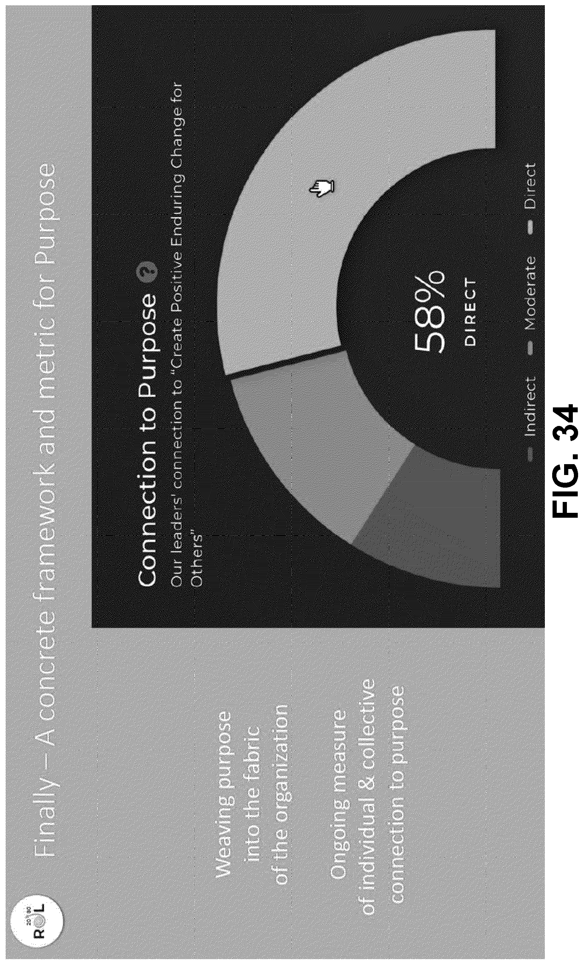

FIG. 34 is an example screenshot showing a graphical representation of indirect, moderate, and direct connection to purpose metrics calculated by the indi system, according to an embodiment.

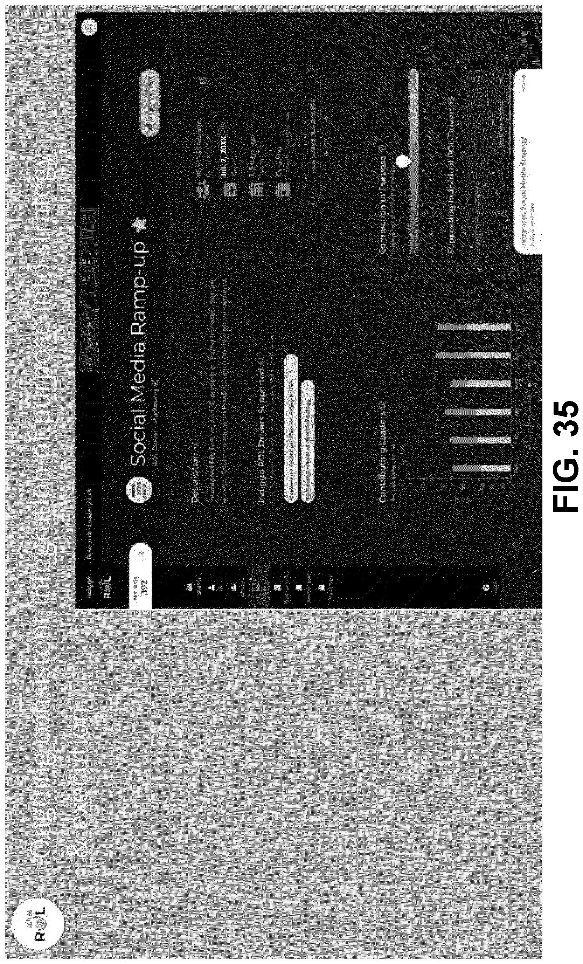

FIG. 35 is an example screenshot showing a detailed view of the definition of a specific business unit-level driver, including a description, related/supported drivers, contributing leaders, according to an embodiment.

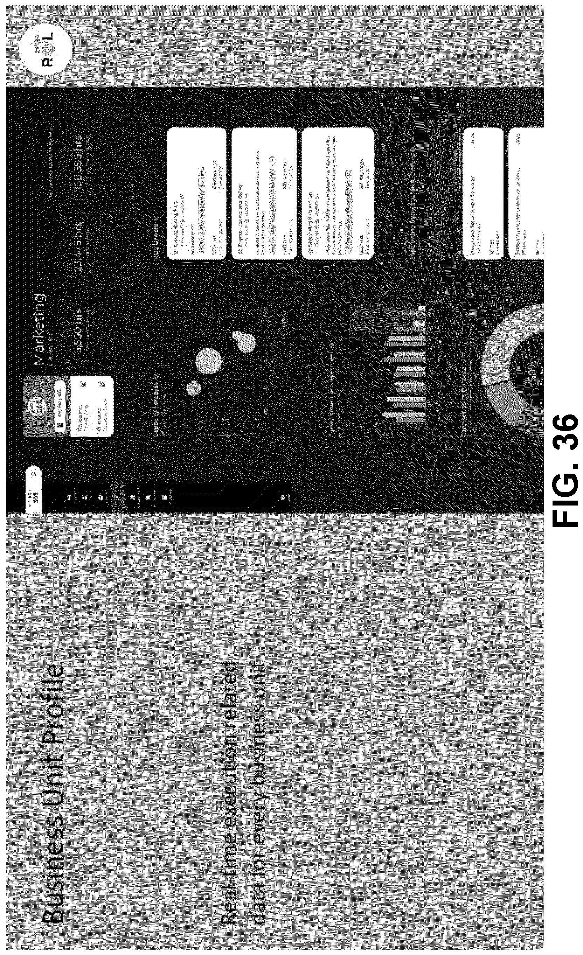

FIG. 36 is an example screenshot showing various business unit-level metrics, including capacity forecasts, drivers, amounts of time invested in drivers for a specific month, year-to-date, and lifetime, according to an embodiment.

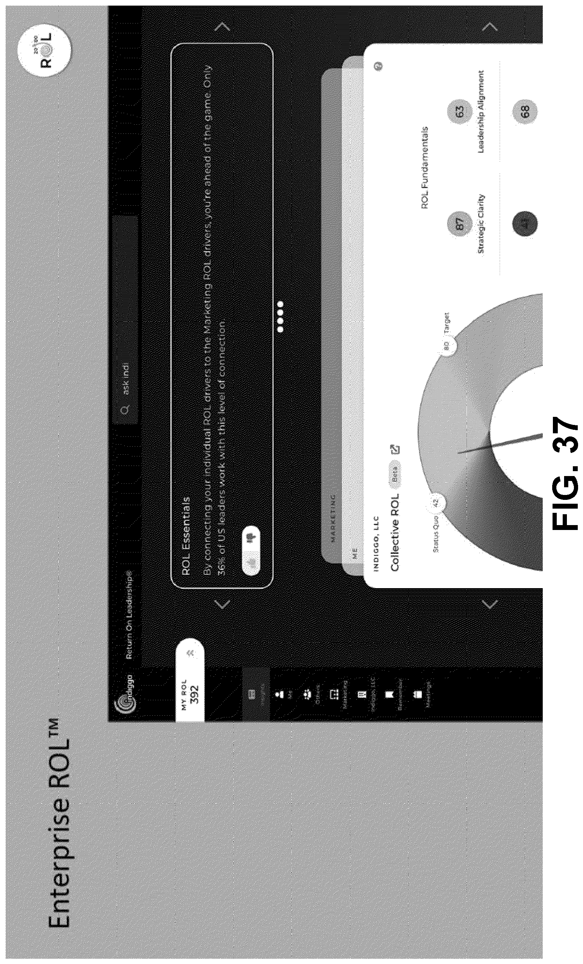

FIG. 37 is an example screenshot showing a graphical depiction of collective return on leadership ("ROL") and fundamental metrics including strategic clarity and leadership alignment, according to an embodiment.

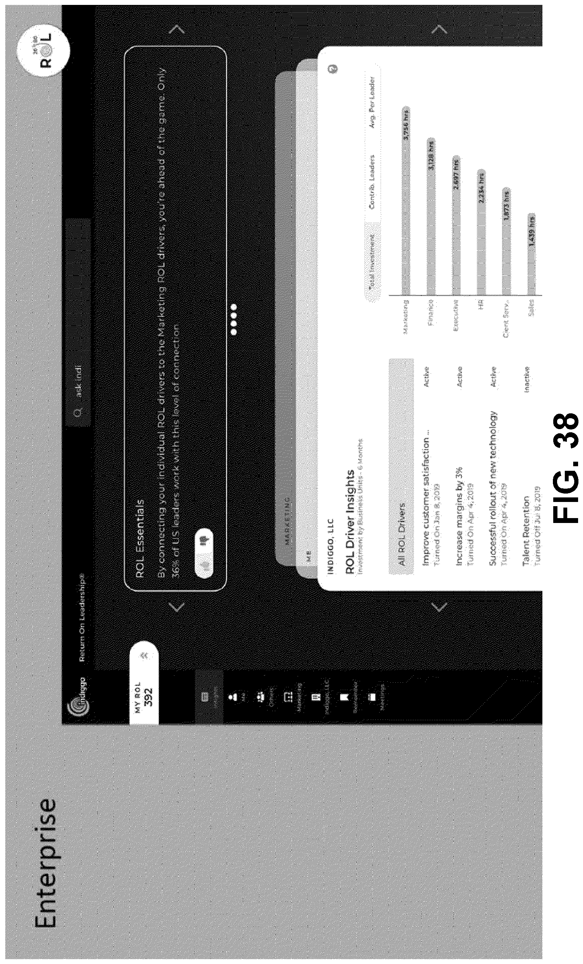

FIG. 38 is an example screenshot showing an interactive bar graph representation of total time investment, contributing leaders, and average investment per leader, for a variety of predefined drivers, according to an embodiment.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, field programmable gate array (FPGA), and/or an application specific integrated circuit (ASIC). Software modules (executed on hardware) can be expressed in a variety of software languages (e.g., computer code), including C, C++, Java™, Ruby, Visual Basic™, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

While various embodiments have been described above, it should be understood that they have been presented by way of example only, and not limitation. Where methods described above indicate certain events occurring in certain order, the ordering of certain events may be modified. Additionally, certain of the events may be performed concurrently in a parallel process when possible, as well as performed sequentially as described above.

**Claims**

1. A method, comprising:

   defining, via a processor, a user purpose profile for each user from a plurality of users within an organization having an organizational purpose; tracking, automatically via the processor and for each user from the plurality of users, an alignment among: (1) a representation of at least one work-related parameter such as a strategy, a goal, or a focus area associated with that user of a computer network of the organization, (2) activity data associated with that user and occurring with the computer network of the organization, and (3) at least one of (i) a representation of the organizational purpose, or (ii) and the user purpose profile associated with that user, to produce tracked data;

identifying, automatically via the processor and using a machine learning algorithm, at least one recommended action based on the tracked data; and

causing a signal representing the at least one recommended action to be sent to a display of a compute device or another device such as a mobile device.

2. The method of claim 1, wherein the at least one recommended action includes a recommended calendar activity.

3. The method of claim 1 or claim 2, wherein the tracking includes detecting a pattern of behavior, and the identifying the at least one recommended action is based on the pattern of behavior.

4. The method of any of the preceding claims, wherein the tracking includes detecting one of an event, a choice or an action by a user, and the identifying the at least one recommended action is based on the detected one of the event, the choice, or the action.

5. The method of any of the preceding claims, further comprising causing a signal to be sent to at least one of the display of the compute device or a display of another device, to cause display of a representation of the alignment, the representation of the alignment including at least one of a graphical representation or a numerical representation.

6. The method of any of the preceding claims, further comprising:

assigning one of a goal, an action, a meeting, or a priority to at least one of an individual purpose or an organizational purpose to produce a connection metric; and
causing a signal representing the connection metric to the display of the compute device or another device.

7. The method of any of the preceding claims, further comprising assigning a priority, a goal, an action, or a meeting to at least one activity associated with the activity data, and the identifying the least one recommended action is further based on the priority.

8. The method of any of the preceding claims, further comprising:

assigning a classification to at least one activity associated with the activity data; and
causing a signal representing the classification of the at least one activity to be sent to the display of the compute device.

9. The method of any of the preceding claims, further comprising assigning a classification to at least one activity associated with the activity data, the identifying the least one recommended action being further based on the classification.

10. The method of any of claims 1 to 8, further comprising assigning a classification and a priority to an activity associated with the activity data, the identifying the least one recommended action being further based on the classification and the priority.

11. The method of any of the preceding claims, further comprising:

automatically measuring an alignment between the representation of the organizational purpose and at least one of an organizational strategy, a goal, a priority, or a driver;
automatically tracking, via the processor, for each user and from a plurality of users, the alignment between the representation of the organizational purpose, and the at least one of the organizational strategy, the goal, the priority, or the driver;
automatically identifying a modification to the organizational strategy based on a degree of alignment between the organizational purpose and the organizational strategy;
automatically generating a recommended action for at least one user from the plurality of users based on the degree of alignment between the organizational purpose and the organizational strategy; and
causing a signal representing the recommended action to be sent to the display of the compute device.

12. The method of any of the preceding claims, wherein the method, when newly introduced, is integrated within the existing workflow of the plurality of users.

13. The method of any of the preceding claims, further comprising:

tracking, automatically via the processor and for each user from the plurality of users, a relationship between the organizational purpose and at least one of a goal, a priority, or a focus area of the organization, to generate tracked relationship data; and
causing a signal representing the tracked relationship data to be sent to the display of the compute device.

14. The method of any of the preceding claims, further comprising:

tracking, automatically via the processor and for each user from the plurality of users, a relationship between the organizational purpose and at least one of a goal, a priority, or a focus area of that user, to generate tracked relationship data; and
causing a signal representing the tracked relationship data to be sent to the display of the compute device.

15. The method of any of the preceding claims, further comprising:

tracking, automatically via the processor and for each user from the plurality of users, a relationship between a predefined purpose of that user and at least one of a goal, a priority, or a focus area of that user, to generate tracked relationship data; and
causing a signal representing the tracked relationship data to be sent to the display of the compute device.

**Schematic of the System to Integrate PURPOSE into Daily Workflow**

FIG. 1A

EP 4 020 357 A1

**FIG. 1B**

FIG. 2

**FIG. 3**

EP 4 020 357 A1

400

450
Provide behavioral prompt [i] to user

452
Gather behavioral response [j] from user

454
Adjust link weights based on responses

456
Determine relevant dimensions

458
Classify response along dimensional categories

460
Identify next behavioral prompt [l]

454A
Sequence weight w(j,k)

454B
Set a=1 if response, else a=-1

454C
Adjust w(j,k)
W(j,k) += (a/N) * w(j,k)

Select l such that W(k,l) is max across all w(k,x) for all x
460A

**FIG. 4**

## Compute Device 501

**User Interface 504** ⬌ **Translation Processor 550**

### Memory 552

| | |
|---|---|
| Instructions 552A | Distribution Types 552E |
| Prompts 552B | Inclination Value Ranges 552F |
| Responses 552C | Compressed Multidimensional Data Profiles 552G |
| Weights 552D | |
| Response Categories 552H | Engagement Schema 552J |

## FIG. 5

EP 4 020 357 A1

600

```
┌─────────────────────────────────────┐
│   Receive Response Data in response to a  │
│              Prompt 602                │
└─────────────────────────────────────┘
                    │
                    ▼
┌─────────────────────────────────────┐
│   Calculate a Weight for the Response Data  │
│          based on a Rule 604           │
└─────────────────────────────────────┘
                    │
                    ▼
┌─────────────────────────────────────┐
│  Identify a First Distribution Type based on the  │
│              Prompt 606               │
└─────────────────────────────────────┘
                    │
                    ▼
┌─────────────────────────────────────┐
│    Identify a First Range of Inclination Values   │
│         based on the Response 608       │
└─────────────────────────────────────┘
                    │
                    ▼
┌ ─ ─ ─ ─ ─ ─ ─ ─ ─ ─ ─ ─ ─ ─ ─ ─ ─ ┐
│  Identify a Second Distribution Type based on  │
│              the Prompt 610            │
└ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ┐
│  Identify a Second Range of Inclination Values  │
│         based on the Response 612       │
└ ─ ─ ─ ─ ─ ─ ─ ─ ─ ─ ─ ─ ─ ─ ─ ─ ─ ┘
                    │
                    ▼
┌─────────────────────────────────────┐
│  Compile a Compressed Multidimensional Data  │
│   Profile based on the Weight, the Distribution   │
│  Type, and the Range of Inclination Values 614  │
└─────────────────────────────────────┘
```

# FIG. 6

**720** Rules for assigning weights

**724** Prompt-Distribution Type Map

**728** Response-Inclination Value(s) Map

**732** Current inclination value range(s)

**718** Assign weight

**722** Look up distribution type(s)

**726** Look up Inclination Value(s)

**730** Read current inclination value range(s)

**734** Adjust inclination value range(s)

**716** Prompt-Response signal(s)

**FIG. 7**

800

```
┌─────────────────────────────────────────┐
│   Send a signal to cause sequential display of │
│      interactive prompts to a user 860         │
└─────────────────────────────────────────┘
                    │
                    ▼
┌─────────────────────────────────────────┐
│   Receive a signal representing a plurality of │
│        responses to the prompts 862            │
└─────────────────────────────────────────┘
                    │
                    ▼
┌─────────────────────────────────────────┐
│  Calculate an adjusted weight for a link between │
│        response(s) and prompt(s) 864            │
└─────────────────────────────────────────┘
                    │
                    ▼
┌─────────────────────────────────────────┐
│  Identify dimension(s) based on the response(s) │
│                    866                          │
└─────────────────────────────────────────┘
                    │
                    ▼
┌─────────────────────────────────────────┐
│  Determine classification for the response(s)  │
│       based on the dimension(s) 868            │
└─────────────────────────────────────────┘
                    │
                    ▼
┌─────────────────────────────────────────┐
│  Compute a multidimensional profile of the user │
│       based on the adjusted weight and the      │
│            classification 870                   │
└─────────────────────────────────────────┘
                    │
                    ▼
┌─────────────────────────────────────────┐
│  Cause display of multidimensional profile via │
│           an interface 872                      │
└─────────────────────────────────────────┘
```

# FIG. 8

900

980

Cause sequential display of prompts to a user, via an interface, based on an engagement schema, a second prompt and each subsequent prompt being based on a response received in response to a preceding prompt 982

Calculate characterization parameter based on responses 984

Cause display of a representation of the characterization parameter via the interface 986

FIG. 9

1000

Cause sequential display of prompts to a user, via an interface, based on an engagement schema, a second prompt and each subsequent prompt from the plurality of prompts being based on a response received in response to a preceding prompt 1092

Calculate purpose connectivity based on responses 1094

Detect that purpose connectivity is below a predefined threshold 1096

Send signal to cause remedial action in response to detecting that purpose connectivity is below a predefined threshold 1098

1090

## FIG. 10

Workprint

Convolutional
Layer

Conn to Purpose

Survey

Error
Estimation

FIG. 11

1200

Define a user purpose profile for each user from a plurality of users within an organization having an organizational purpose 1202

Track, each user from the plurality of users, an alignment among: (1) a representation of at least one work-related parameter such as a strategy, a goal, or a focus area associated with that user of a computer network of the organization, (2) activity data associated with that user and occurring with the computer network of the organization, and (3) at least one of (i) a representation of the organizational purpose, or (ii) and the user purpose profile associated with that user, to produce tracked data 1204

Identify, automatically and using a machine learning algorithm, at least one recommended action based on the tracked data 1206

Cause a signal representing the at least one recommended action to be sent to a display of a compute device or another device such as a mobile device 1208

# FIG. 12

1300

Define a user purpose profile for each user from a plurality of users within an organization having an organizational purpose 1302

Track, via an autonomous software program, and for each user or from the plurality of users, purpose alignment data representing an alignment between activity data associated with that user, and (i) a representation of the organizational purpose, and (ii) the user purpose profile associated with that user 1304

Store the purpose alignment data in a data repository 1306

Receive, via the autonomous software program, a request from a user from the plurality of users 1308

Retrieve at least a portion of the purpose alignment data from the data repository in response to the request 1310

Cause a signal representing the at least a portion of the purpose alignment data to be sent to a display of a compute device 1312

## FIG. 13

1400

Receive input from each user from a plurality of users within an organization having an organizational purpose represented by at least one organizational purpose profile 1402

Define, based on the input, a user purpose profile for each user from the plurality of users 1404

**Connect, for each user, a purpose of that user and the organizational purpose 1406**

Compare, for each user from the plurality of users, (i) activity data associated with that user and occurring with a computer network of the organization, and (ii) and the user purpose profile associated with that user 1406A

Track, based on the comparing, at least one of: an individual purpose connection metric for each user from the plurality of users, or an aggregated purpose connection metric for the plurality of users 1406B

Repeatedly cause a signal representing at least one of the individual purpose connection metrics or the aggregated purpose connection metrics to be sent to a display of a compute device 1406C

**Determine an alignment, via the processor, of the user purpose profile for each user from a plurality of users with the at least one organizational purpose profile 1408**

Track, automatically and for each of the users, a relationship between at least one of: (1) the user purpose profile of that user and at least one organizational purpose profile, (2) the user purpose profile of that user and at least one of a goal, a priority, or a focus area of that user, (3) the at least one organizational purpose profile and at least one of the goal, the priority, or the focus area of that user, or (4) the at least one organizational purpose profile and the activity data associated with that user, to generate tracked relationship data 1408A

Cause a signal representing one of the tracked relationship data or a metric associated with the tracked relationship data to be sent to the display of the compute device 1408B

# FIG. 14

1500

Receive a representation of a core purpose
of at least one user from a plurality of users
within an organization 1502

Receive a representation of a core purpose
of the organization 1504

Receive, from a networked plurality of
compute devices of the organization,
workflow data for the plurality of users 1506

Identify a relationship between the workflow data and the
core purpose of the at least one user and/or the core
purpose of the organization, based on the workflow data
and at least one of the representation of the core purpose
of the at least one user or the representation of the core
purpose of the organization 1508

Identify a recommended behavior
modification for the at least one user, based
on the identified relationship 1510

Send a signal to cause display of the
recommended behavior modification to the
at least one user 1512

# FIG. 15

1600

Receive a representation of a core purpose of at least one user from a plurality of users within an organization 1602

Receive a representation of a core purpose of the organization 1604

Receive, from a networked plurality of compute devices of the organization, workflow data for the plurality of users 1606

Identify a relationship between the workflow data and at least one of the core purpose of the at least one user or the core purpose of the organization, based on the workflow data and at least one of the representation of the core purpose of the at least one user or the representation of the core purpose of the organization 1608

Identify a recommended strategy modification, based on the identified relationship 1610

Send a signal to cause display of the recommended strategy modification via a compute device from the networked plurality of compute devices 1612

# FIG. 16

1700

Receive a representation of a core purpose of at least one user from a plurality of users within an organization 1702

Receive a representation of a core purpose of the organization 1704

Receive, from a networked plurality of compute devices of the organization, workflow data for the plurality of users 1706

Identify a relationship between the workflow data and at least one of the core purpose of the at least one user or the core purpose of the organization, based on the workflow data and at least one of the representation of the core purpose of the at least one user or the representation of the core purpose of the organization 1708

Identify a recommended calendar modification for the at least one user, based on the identified relationship 1710

Send a signal to cause display of the recommended calendar modification to the at least one user 1712

## FIG. 17

indi　Chat　About

indi　11:42 AM
Indi makes it easy for you to increase your score by giving you specific actions that will not only help you to execute with greater clarity, focus and alignment, but will also serve to impact scores in each dimension. The actions listed are personalized and change over time based on the types of actions you've been taking (and not taking) related to Return On Leadership. **Just ask me to show your essentials for today. If you follow my suggestions, I will show you new ones tomorrow.**
Or you can go to the Platform. Just click on each of the 4 dimensions for immediate access to indi's suggestions on My ROL (as shown here).

Show My ROL Essentials　　None of the above.

12:02 PM
show my drivers

indi　12:02 PM
**Here are your currently active drivers:**
- **Patent related work**
  - Complete and submit the two purpose related patents
  - Follow up on the responses on other applications
- **Drive Usage through iROL Advice Framework**
  - The principal idea is to tune the iROL advice framework to drive usage using principles of AI. Includes leveraging development pathways and refining portfolio of advices
- **Collective ROL Activation**
  - Design and develop strategies to help leaders interpret and leverage the insights from the Collective ROL measurements effectively.

Click Here to Change Your Drivers or Time Commitment

# FIG. 18

**indi** Monday 9:09 AM

Hello Vijay. Here are your ROL Essentials for today:

- Nice work ... your ROL Score is up from last week! Indi has recommendations for you that can help sustain the trend
  See indi's suggestions
- Even if your ROL Drivers dont change, your calendar and demands do, so take a minute to align your capacity commitment to the upcoming month
  Update your time commitment
- Potential stress and disconnect have been reduced since you have aligned with your manager and relevant reports on ROL Drivers for the upcoming month
- $35B a year is wasted on meetings that shouldn't even happen!

# FIG. 19

indi  Chat  About

indi  11:42 AM
Indi makes it easy for you to increase your score by giving you specifi
you to execute with greater clarity, focus and alignment, but will also
dimension. The actions listed are personalized and change over time
you've been taking (and not taking) related to Return On Leadership.
**essentials for today. If you follow my suggestions, I will show you**
Or you can go to the Platform. Just click on each of the 4 dimensions
suggestions on My ROL (as shown here).

**indi**
Available

ROL Essentials for the day

Created by
indi

Here's what this app can do:
- Receive messages and data that I provide to it.
- Send me messages and notifications.
- Access my profile information such as my name, email address, company name, and preferred language.
- Receive messages and data that team members provide to it in a channel.
- Send messages and notifications in a channel.
- Access this team's information such as team name, channel list and roster (including team member's names and email addresses) - and use this to contact them.

Privacy statement     Services agreement

above.

ose related patents
er applications
ework
L advice framework
ent pathways and re

elp leaders interpret
ffectively.

mitment

What can I do?

# FIG. 20

EP 4 020 357 A1

indiggo  Return On Leadership®  red  orange  yellow  green  teal

R⬤L

MY ROL TREND

**ROL Fundamentals** ⓘ

Explore ROL Fundamentals to improve your ROL and become a more effective leader

MY ROL
**403**

teal

**434**

Strategic Clarity

Leadership Alignment ⓘ

Even if your ROL Drivers dont change, your calendar and demands do, so take a minute
to align your capacity commitment to the upcoming month

UPDATE YOUR TIME COMMITMENT

yellow

**256**

Leadership Alignment

teal

**559**

Connection to Purpose

My Leadership Alignment Trend
Weekly  Monthly

500

400

300

200

100

0

teal

**373**

Focused Action

Insights
Me
Other Leaders
Data Science
Indiggo
Remember
Meetings
Help

# FIG. 21

FIG. 22

EP 4 020 357 A1

FIG. 23

Activities automatically
scheduled by the software

FIG. 24

EP 4 020 357 A1

| Action | Metric | Detail | Unit |
|---|---|---|---|
| Whether driver was created | Driver Edits | Whether at least one driver was turned on within last 30 days | Number of priorities that were created or modified in the last 30 days |
| Whether individual purpose was created | Purpose Edits | Whether individual purpose was created | Boolean to respresent whether purpose is defined by leader |
| Whether driver was changed/edited | Driver Edits | Whether driver was created, changed/updated/confirmed or edited within last 30 days | Number of priorities that were modified (edited or time changed) in the last 30 days |
| Whether driver was confirmed | Driver Edits | Whether driver was confirmed within last 30 days | Number of priorities that were confirmed or modified in the last 30 days |
| Whether time commit to priorities was modified | Driver Edits | Time commitment to at least one driver was updated | Number of drivers with changes to time commitment made in the last 30 days |
| Whether drivers are linked to BUS UNIT | Driver Linking | Whether at least one driver is mapped to a current bus unit | Number of drivers that are mapped to business unit drivers |
| Whether visited Organizational purpose | Organization Purpose | Whether the organization purpose content was visited | Boolean to represent that organizational purpose content was visited |
| Whether stated purpose was linked to organizational purpose | Purpose Linking | Whether a valid link exists between individual purpose and organizational purpose | Boolean to represent that a valid confirmed link exists |
| Whethe stated purpose was linked to organizational strategy | Strategy Linking | Whether the stated purpose was linked to organizaional strategy | Vector representation of linkbetween purpose and organizational strategy |
| Number of events connected to purpose | Event Linking | Scheduled events linked to purpose | Boolean vector representing event links to purpose |
| Number of drivers/individual work connected to purpose | Driver Linking | Linking drivers to purpose | Boolean vectordescribing links between drivers and purpose |
| Alignment to team members | Peer Alignment | Alignment with other team members | Boolean vectors indicating alignment with other team members |
| Number of purpose related messages triggered | Message triggering | Purpose related messages triggered by leaders | Number of purpose related messages triggered |

# FIG. 25A

EP 4 020 357 A1

| Action | Metric | Detail | Unit |
|---|---|---|---|
| | | | |
| Promptness of responses by supervisor to priority alignment requests | Driver Alignment Response | Must have received align requests and responded within 2 days of the request to qualify for this | Extra points for alignment response with 2 days |
| Clicking on ROL essentials - from platform, plugin, or mobile | Acting from ROL Essentials | At least one action from ROL Essentials | Number of clicks from the action link within ROL Essentials in 30 days |
| Promptness of responses to ROL requests from execs | Response to Exec Requests | Must have received an executive request and responded within 2 days of the request to qualify for | Extra points for alignment response with 2 days |
| Viewed capacity forecast | Capacity Forecast | View of capacity forecast page | Number of LFF Views in a 90 day period |
| Visits to INDIVIDUAL ROL index | View Individual ROL | yes or no | Number of views of individual ROL in a 30 day period |
| Share of individual time committed to priorities | Time committed | At least 20% (10 hours) per week is committed to all drivers combined | Percentage of time committed to priorities - current |
| Percentage of next steps completed | Next Steps Completed | Completed at least one next step by the due date if they have next | Percentage of next steps created during the last 30 days that are marked as completed |
| Number of meetings agenda that were requested | Agendas Requested | At least one agenda was requested | Number of request agendas |
| Whether visited inContact | inContact Visited | yes or no | Number of visits to the in-Contact page during a 90 day period |
| Number of views of crews | Number of Crew Views | yes or no | Number of views of crews in the last 60 days |
| Liking ROL essentialls | Like on ROL Essentials | Liked/disliked at least one action from ROL Essentials | Number of likes/dislikes for ROL Essentials in the last 30 days |
| Home page interactions with cards | | | |
| Other leaders Profile view | Other Profile View | yes or no | Number of visits to other leaders' profile in the last 30 days |
| Other bus unit profile view | Other BU Profile View | yes or no | Number of visits to other business unit drivers in the last 30 days |
| Org profile view | Org Profile View | yes or no | Number of visits to organizational drivers in the last 30 days |

# FIG. 25B

| Action | Metric | Detail | Unit |
|---|---|---|---|
| | | | |
| Other bus unit driver profile view | Other BU Driver View | yes or no | Number of visits to other business unit profile view in the last 30 days |

Definitions:

Driver: Area of focus / key priority related to strategy and work

Organizational Purpose: The fundamental reason for the existence

Individual Purpose: the fundamental reason for the work that an individual

# FIG. 25C

EP 4 020 357 A1

FIG. 26

FIG. 27

**FIG. 28**

EP 4 020 357 A1

FIG. 29

**FIG. 30**

**FIG. 31**

FIG. 32

FIG. 33

FIG. 34

FIG. 35

FIG. 36

FIG. 37

FIG. 38

EP 4 020 357 A1

Europäisches
Patentamt

European
Patent Office

Office européen
des brevets

# EUROPEAN SEARCH REPORT

**Application Number**

EP 21 21 7589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 242 260 A1 (INDIGGO ASS LLC [US]) 8 November 2017 (2017-11-08) * paragraph [0021] - paragraph [0032] * * paragraph [0052] - paragraph [0060] * * figures 1,3 * | 1-15 | INV. G06Q10/10 |

TECHNICAL FIELDS
SEARCHED     (IPC)

G06Q

The present search report has been drawn up for all claims

| Place of search | Date of completion of the search | Examiner |
|---|---|---|
| Munich | 13 April 2022 | Hasubek, Bodo |

EPO FORM 1503 03.82 (P04C01)

## ANNEX TO THE EUROPEAN SEARCH REPORT
## ON EUROPEAN PATENT APPLICATION NO.

EP 21 21 7589

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2022

| Patent document cited in search report | | Publication date | Patent family member(s) | | Publication date |
|---|---|---|---|---|---|
| EP 3242260 | A1 | 08-11-2017 | EP | 3242260 A1 | 08-11-2017 |
| | | | IL | 252002 A | 30-11-2020 |
| | | | US | 2017316322 A1 | 02-11-2017 |

EPO FORM P0459

For more details about this annex : see Official Journal of the European Patent Office, No. 12/82

**EP 4 020 357 A1**

**Patent documents cited in the description**

- US 63130343
- US 10255700 B